# EUROPEAN PATENT SPECIFICATION

(11) **EP 4 206 511 B1**
(45) Date of publication and mention of the grant of the patent: **20.08.2025**
(21) Application number: 21861632.4
(22) Date of filing: 25.08.2021
(51) Int. Cl.: F16L 15/04, E21B 17/042, F16L 15/00, F16L 15/08

(54) **OIL-WELL METAL PIPE**
METALLROHR FÜR ÖLBOHRLOCH
TUYAU MÉTALLIQUE POUR PUITS DE PÉTROLE

(30) Priority: 27.08.2020 JP 2020143510
(43) Date of publication of application: 05.07.2023
(73) Proprietor: NIPPON STEEL CORPORATION, Chiyoda-ku Tokyo 100-8071 (JP); Vallourec Oil and Gas France, 59620 Aulnoye-Aymeries (FR)
(72) Inventor: BENIYA, Yuki, Tokyo 100-8071 (JP); NAKAMURA, Keiichi, Tokyo 100-8071 (JP); KURANISHI, Takao, Tokyo 100-8071 (JP)
(74) Representative: J A Kemp LLP
(86) International application number: PCT/JP2021/031212
(87) International publication number: WO 2022/045209

(56) References cited:
- EP-A1- 3 696 256
- WO-A1-2018/216416
- WO-A1-2019/074103
- JP-A- 2002 257 270
- JP-A- 2003 042 354
- US-A1- 2014 284 919

## Description

### TECHNICAL FIELD

The present disclosure relates to an oil-well metal pipe.

### BACKGROUND ART

An oil-well metal pipe is used for drilling in oil fields and natural gas fields (hereinafter, oil fields and natural gas fields are collectively referred to as "oil wells"). An oil-well metal pipe has a threaded connection. At the oil well drilling site, in accordance with the depth of the oil well, a plurality of oil-well metal pipes are connected to form an oil country tubular goods connected body. The oil country tubular goods connected body is formed by fastening oil-well metal pipes to each other. The oil country tubular goods connected body is lifted up and loosened for the purpose of inspection and the like, and after being inspected, the oil country tubular goods connected body is refastened and reused.

An oil-well metal pipe includes a pin and a box. The pin has a pin contact surface including an external thread part on an outer peripheral surface of an end portion of the oil-well metal pipe. The box has a box contact surface including an internal thread part on an inner peripheral surface of an end portion of the oil-well metal pipe.

The pin contact surface and the box contact surface repeatedly experience strong friction during fastening and loosening of the oil-well metal pipe. Unless there is sufficient durability with respect to friction at the pin contact surface and the box contact surface, galling (uncorrectable seizure) will occur during repeated fastening and loosening. Therefore, an oil-well metal pipe is required to have sufficient durability with respect to friction, that is, to have excellent galling resistance.

Conventionally, heavy metal-containing compound greases, which are referred to as "dopes", have been used to improve the galling resistance. Application of a compound grease to the pin contact surface and/or the box contact surface can improve the galling resistance of an oil-well metal pipe. However, heavy metals contained in compound greases, such as Pb, Zn, and Cu, may affect the environment. For this reason, the development of an oil-well metal pipe that is excellent in galling resistance without the use of a compound grease is desired.

Therefore, techniques have been proposed that employ a solid lubricant coating instead of a compound grease. For example, in a threaded connection for pipes proposed in International Application Publication No. WO2009/072486 (Patent Literature 1), a solid lubricant coating is formed on a box contact surface, and a solid anticorrosive coating composed of a UV curable resin is formed on a pin contact surface. It is described in Patent Literature 1 that by means of the solid lubricant coating, the occurrence of galling can be suppressed even when fastening and loosening are repeated.

In this connection, when an oil country tubular goods connected body in which a plurality of oil-well metal pipes are fastened together is pushed forward into an oil well, the oil country tubular goods connected body is pushed forward while being rotated. Strata in which petroleum is buried (oil strata) extend in the horizontal direction, not in the vertical direction. Therefore, oil drilling techniques such as directional drilling or horizontal drilling are being employed in an increasing number of cases for the purpose of covering a wide range of an oil stratum to increase the petroleum production efficiency. In directional drilling and horizontal drilling, an oil country tubular goods connected body is caused to curve when underground, and a bottom end portion of the oil country tubular goods connected body is caused to extend diagonally or in a horizontal direction. In a case where an oil well extends in a horizontal direction or an inclined direction, the longer that the length in the horizontal direction or the length in the inclined direction is, the greater that the rotational torque required to cause the oil country tubular goods connected body to advance will be. In a case where this kind of high rotational torque is applied, if the oil-well metal pipe undergoes plastic deformation, in some cases it may not be possible to maintain a high level of gastightness performance. Therefore, there is a need for an oil-well metal pipe which is not liable to undergo plastic deformation even when a high rotational torque is applied, in other words, an oil-well metal pipe which has high yield torque.

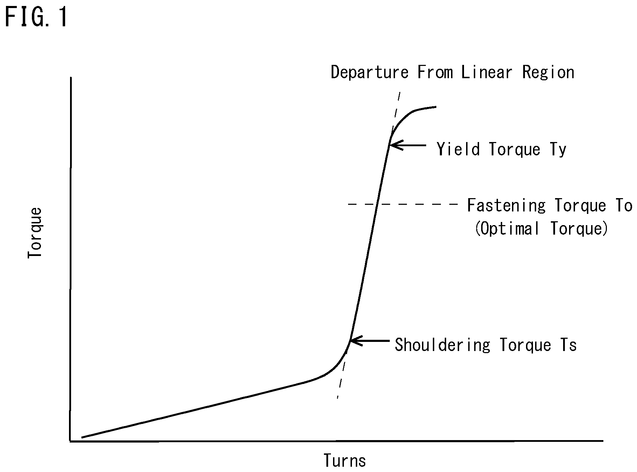

In this regard, the "yield torque" is defined as follows. FIG. 1 is a graph illustrating the relation between the number of turns of an oil-well metal pipe and the torque, when the oil-well metal pipe is fastened. Referring to FIG. 1, when oil-well metal pipes are fastened, initially the torque increases moderately in proportion to the number of turns. As fastening continues, shoulder parts of the oil-well metal pipes come in contact with each other. The torque at such time is referred to as "shouldering torque Ts". After the shouldering torque Ts is reached, when fastening is continued, the torque rapidly increases in proportion to the number of turns. The fastening is completed at a time point at which the torque reaches a predetermined value (fastening torque To). At the fastening torque To, a pin contact surface and a box contact surface interfere with each other with an appropriate interfacial pressure. In this case, the gastightness of the oil country tubular goods connected body that is formed by fastening together a plurality of the oil-well metal pipes is high. However, if the torque applied to the oil-well metal pipe is further increased, in some cases a portion of the pin and the box yields, and plastic deformation occurs. The torque at such time is referred to as "yield torque Ty".

In this connection, in a case where an oil-well metal pipe does not have a shoulder part, that is, in the case of an oil-well metal pipe having a so-called "wedge thread", the relation between the number of turns of the oil-well metal pipe and the torque is as shown in FIG. 1, similarly to the case of the oil-well metal pipe which has a shoulder part. In this regard, in the case of a wedge thread, in the direction in which screwing of the pin advances, the width of a thread ridge of an external thread part gradually narrows along the thread helix, the width of a thread groove of the external thread part gradually widens along the thread helix. In addition, in the direction in which screwing of the pin advances, the width of a thread groove of an internal thread part gradually narrows along the thread helix, and the width of a thread ridge of the internal thread part gradually widens along the thread helix.

In the case of an oil-well metal pipe which has a wedge thread and does not have a shoulder part, as fastening progresses, the load flanks of the external thread part and the internal thread part come in contact with each other and stabbing flanks of the external thread part and the internal thread part come in contact with each other, and locking (interference fitting) occurs. The torque at the time that locking occurs is referred to as "locking torque". Locking torque is equivalent to shouldering torque in an oil-well metal pipe that has a shoulder part. Therefore, in the present description, unless specifically stated otherwise, no distinction is made between locking torque and shouldering torque, and the term "shouldering torque" is used to refer thereto. In the case of an oil-well metal pipe having a wedge thread also, similarly to an oil-well metal pipe having a shoulder part, after reaching the shouldering torque Ts, if fastening is continued further, the torque will rapidly increase in proportion to the number of turns. Furthermore, if fastening is additionally continued thereafter, the yield torque Ty occurs.

As described above, recently there is a demand for an oil-well metal pipe having high yield torque which is not liable to undergo plastic deformation even in a case where high rotational torque is applied. International Application Publication No. 2013/176281 (Patent Literature 2) proposes a tube-like threaded connection that is excellent in high torque fastening performance. In the tube-like threaded connection disclosed in Patent Literature 2, a first solid lubricant coating is formed at a portion that includes a shoulder part of a contact surface of at least one of a pin and a box. Further, a second solid lubricant coating is formed at least at, with respect to the entire contact surface, a portion at which the first solid lubricant coating is not formed. The Knoop hardness of the first solid lubricant coating is higher than the Knoop hardness of the second solid lubricant coating. During fastening, until the shoulder part of the pin and the shoulder part of the box come in contact, the second solid lubricant coating which has the lower Knoop hardness acts, and thereby reduces the coefficient of friction during fastening. Therefore, the shouldering torque is kept low. After the shoulder part of the pin and the shoulder part of the box come in contact, the first solid lubricant coating which has the higher Knoop hardness acts, and thereby increases the coefficient of friction. By this means, the yield torque increases.
US2014/0284919 discloses a tubular threaded joint constituted by a pin and a box each having a contact surface comprising an unthreaded metal contact portion including a seal portion and a shoulder portion and a threaded portion. Of the contact surface of at least one of the pin and the box, the surfaces of the seal portion and the shoulder portion has a first lubricating coating in the form of a solid lubricating coating, and the surface of the threaded portion or the entire surface of the contact surface has a second lubricating coating selected from a viscous liquid lubricating coating and a solid lubricating coating. The first lubricating coating has a coefficient of friction which is higher than that of the second lubricating coating, and the second lubricating coating is positioned on top in a portion where both the first lubricating coating and the second lubricating coating are present.
EP3,696,256 discloses a composition, and a threaded connection for pipes or tubes that includes a lubricant coating layer formed from the composition. The composition is a composition for forming a lubricant coating layer on a threaded connection for pipes or tubes, and contains Cr203, a metal soap, a wax and a basic metal salt of an aromatic organic acid. The threaded connection for pipes or tubes includes a pin and a box. The pin and the box each include a contact surface including a threaded portion, and an unthreaded metal contact portion. The threaded connection for pipes or tubes includes, as an outermost layer, a lubricant coating layer formed from the aforementioned composition on at least one of the contact surfaces of the pin and the box.

### CITATION LIST

### PATENT LITERATURE

Patent Literature 1: International Application Publication No. 2009/072486
Patent Literature 2: International Application Publication No. 2013/176281

### SUMMARY OF INVENTION

### TECHNICAL PROBLEM

It is possible to increase the yield torque by employing the technique disclosed in Patent Literature 2. However, the yield torque may also be increased by other techniques. Further, as described above, an oil-well metal pipe is also required to have galling resistance. Therefore, it is desirable to be able to achieve both high yield torque and excellent galling resistance in a compatible manner.

An objective of the present disclosure is to provide an oil-well metal pipe which is capable of achieving both high yield torque and excellent galling resistance in a compatible manner.

### SOLUTION TO PROBLEM

An oil-well metal pipe according to the present disclosure includes:
a pipe main body including a first end portion and a second end portion,
wherein:
   the pipe main body includes:
   a pin formed at the first end portion, and
   a box formed at the second end portion;
   the pin includes:
      a pin contact surface which at least has an external thread part formed on an outer peripheral surface of the first end portion of the pipe main body;
      the box includes:
         a box contact surface which at least has an internal thread part formed on an inner peripheral surface of the second end portion of the pipe main body;
         a plating layer is formed on a first contact surface, the first contact surface being one of the pin contact surface and the box contact surface;
         a solid lubricant layer is formed on the plating layer;
         an arithmetic average roughness Ra of a second contact surface is within a range of 0.5 to 10.0 µm, the second contact surface being the other of the pin contact surface and the box contact surface; and
         a semi-solid or liquid anti-rust coating is formed on the second contact surface.

### ADVANTAGEOUS EFFECTS OF INVENTION

An oil-well metal pipe according to the present embodiment can achieve both high yield torque and excellent galling resistance in a compatible manner.

### BRIEF DESCRIPTION OF DRAWINGS

[FIG. 1] FIG. 1 is a graph illustrating the relation between the number of turns of an oil-well metal pipe and the torque, when fastening the oil-well metal pipe.
[FIG. 2] FIG. 2 is a configuration diagram illustrating one example of a T&C type oil-well metal pipe according to the present embodiment.
[FIG. 3] FIG. 3 is a partial cross-sectional view illustrating a cross section (longitudinal cross section) parallel to a pipe axis direction of a coupling of an oil-well metal pipe illustrated in FIG. 2.
[FIG. 4] FIG. 4 is a cross-sectional view parallel to the pipe axis direction of the oil-well metal pipe illustrated in FIG. 3, illustrating a portion in the vicinity of a pin of the oil-well metal pipe.
[FIG. 5] FIG. 5 is a cross-sectional view parallel to the pipe axis direction of the oil-well metal pipe illustrated in FIG. 3, illustrating a portion in the vicinity of a box of the oil-well metal pipe.
[FIG. 6] FIG. 6 is a configuration diagram illustrating another T&C type oil-well metal pipe that is different from FIG. 2.
[FIG. 7] FIG. 7 is a configuration diagram illustrating an integral type oil-well metal pipe according to the present embodiment.
[FIG. 8] FIG. 8 is a cross-sectional view for describing the structure on a first contact surface in a case where the first contact surface is a box contact surface.
[FIG. 9] FIG. 9 is a cross-sectional view for describing the structure on a second contact surface in a case where the second contact surface is a pin contact surface.
[FIG. 10] FIG. 10 is an enlarged view of a portion in the vicinity of the second contact surface (in FIG. 9, the pin contact surface) illustrated in FIG. 9.
[FIG. 11] FIG. 11 is a cross-sectional view for describing the structure on a first contact surface in a case where the first contact surface is a pin contact surface.
[FIG. 12] FIG. 12 is a cross-sectional view for describing the structure on a second contact surface in a case where the second contact surface is a box contact surface.
[FIG. 13] FIG. 13 is a view that illustrates the structure of a second contact surface that includes a chemical treatment coating in a case where the second contact surface is a pin contact surface.
[FIG. 14] FIG. 14 is a torque chart for describing a yield torque measurement test with regard to the Examples.

### DESCRIPTION OF EMBODIMENTS

The present embodiment will be described in detail below with reference to the accompanying drawings. The same reference symbols will be used throughout the drawings to refer to the same or like parts, and description thereof will not be repeated.

The present inventors conducted various studies regarding an oil-well metal pipe which can achieve both a high yield torque and excellent galling resistance in a compatible manner. As a result, the present inventors obtained the following findings.

In order to increase galling resistance during fastening of an oil-well metal pipe, it is preferable to form a plating layer on either one contact surface (hereinafter, referred to as "first contact surface") among a contact surface of a pin (hereinafter, referred to as "pin contact surface") and a contact surface of a box (hereinafter, referred to as "box contact surface"), and to also form a solid lubricant layer on the plating layer. The galling resistance is increased by a lubrication action of the solid lubricant layer. The plating layer also increases the galling resistance, and a plating layer that has high hardness and a high melting point further increases the galling resistance during fastening. Therefore, the present inventors thought that, taking into consideration of galling resistance, it is preferable to form a plating layer and a solid lubricant layer in a laminated manner on the first contact surface, which is one of the pin contact surface and the box contact surface.

In a case where a plating layer and a solid lubricant layer are laminated on the first contact surface, which is one contact surface among the pin contact surface and the box contact surface, the present inventors also conducted studies regarding the structure of a second contact surface, which is the other contact surface among the pin contact surface and the box contact surface, in order to increase yield torque while maintaining galling resistance.

In this connection, after being produced, oil-well metal pipes are stored outdoors at a local yard that is near to the oil well drilling site until being actually utilized for oil well drilling. Thus, an oil-well metal pipe is also required to have a certain amount of corrosion resistance, and not only galling resistance. Therefore, in a conventional oil-well metal pipe, among the pin contact surface and the box contact surface of the oil-well metal pipe, in some cases a solid lubricant layer is formed on the uppermost layer of the first contact surface, and a well-known solid anticorrosive coating composed of a UV curable resin is formed on the uppermost layer of the second contact surface. However, a solid anticorrosive coating does not have an action that increases yield torque.

Therefore, the present inventors had the idea of increasing the coefficient of friction and increasing the yield torque during fastening by making the surface form (texture) of the second contact surface a different form to that in the conventional oil-well metal pipe, without employing a solid anticorrosive coating. Further as the result of additional consideration, the present inventors had the idea that, if the second contact surface is roughened to a certain extent, when the first contact surface and the second contact surface strongly contact during fastening, a high coefficient of friction will be obtained by means of the plating layer under the solid lubricant layer of the first contact surface and the unevenness of the second contact surface, and as a result the yield torque will increase.

On the other hand, it is preferable for corrosion resistance to be secured to a certain extent in the second contact surface. However, if a conventional well-known solid anticorrosive coating is formed on the second contact surface whose surface has been roughened, the unevenness of the second contact surface will not be reflected in the surface of the solid anticorrosive coating, and consequently the surface of the solid anticorrosive coating will not be roughened to the extent of the unevenness of the second contact surface.

Therefore, the present inventors conceived of forming a semi-solid or liquid anti-rust coating, and not a solid coating, on the second contact surface that is a roughened surface. When a semi-solid or liquid anti-rust coating is formed on the roughened second contact surface, an anti-rust property of the second contact surface is secured by the anti-rust coating, and when the first contact surface and the second contact surface strongly contact during thread fastening, the anti-rust coating at the contact portion is easily squeezed out from between the first contact surface and the second contact surface. Thus, by means of the plating layer under the solid lubricant layer of the first contact surface and the unevenness of the second contact surface, a high coefficient of friction is obtained and, as a result, the yield torque increases.

An oil-well metal pipe of the present embodiment, which has been completed based on the above findings, has the following structure.

[1] An oil-well metal pipe including:
   a pipe main body including a first end portion and a second end portion,
   wherein:
      the pipe main body includes:
      a pin formed at the first end portion, and
      a box formed at the second end portion;
      the pin includes:
         a pin contact surface which at least has an external thread part formed on an outer peripheral surface of the first end portion of the pipe main body;
         the box includes:
            a box contact surface which at least has an internal thread part formed on an inner peripheral surface of the second end portion of the pipe main body;
            a plating layer is formed on a first contact surface, the first contact surface being one of the pin contact surface and the box contact surface;
            a solid lubricant layer is formed on the plating layer;
            an arithmetic average roughness Ra of a second contact surface is within a range of 0.5 to 10.0 µm, the second contact surface being the other of the pin contact surface and the box contact surface; and
            a semi-solid or liquid anti-rust coating is formed on the second contact surface.
[2] The oil-well metal pipe according to [1], wherein:
   a chemical treatment coating is further formed on the second contact surface, and
   the anti-rust coating is formed on the chemical treatment coating.
[3] The oil-well metal pipe according to [1] or [2], wherein:
   the second contact surface is subjected to a blasting treatment.
[4] The oil-well metal pipe according to any one of [1] to [3], wherein:
   the plating layer is composed of a Zn-Ni alloy.

Hereunder, the oil-well metal pipe of the present embodiment will be described in detail.

### [Structure of oil-well metal pipe]

First, prior to describing the oil-well metal pipe of the present embodiment, the structures of oil-well metal pipes that are the subject of the present embodiment will be described. The available types of oil-well metal pipe are a T&C type oil-well metal pipe and an integral type oil-well metal pipe. Hereunder, each type of oil-well metal pipe will be described in detail.

### [Case where oil-well metal pipe 1 is T&C type]

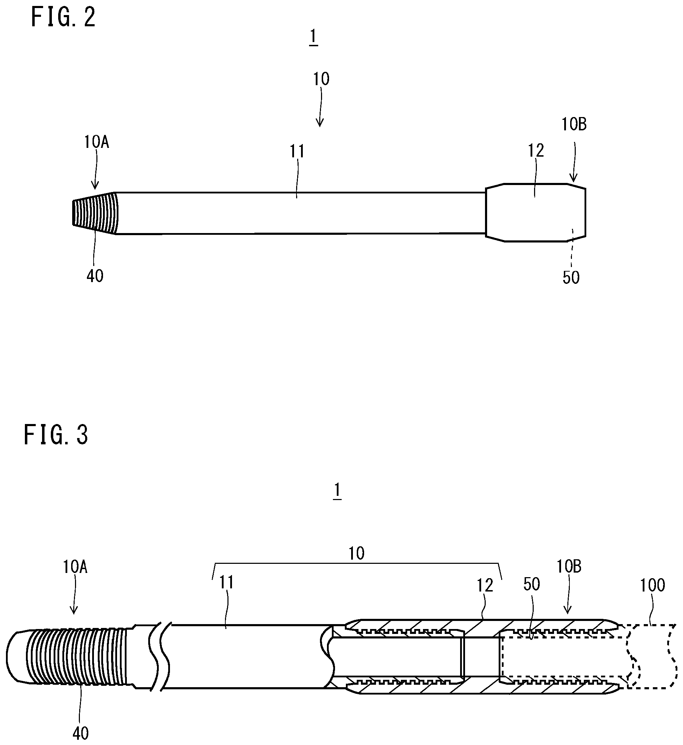

FIG. 2 is a configuration diagram illustrating one example of an oil-well metal pipe 1 according to the present embodiment. FIG. 2 is a configuration diagram illustrating the oil-well metal pipe 1 of a so-called T&C (threaded and coupled) type. Referring to FIG. 2, the oil-well metal pipe 1 includes a pipe main body 10.

The pipe main body 10 extends in the pipe axis direction. A cross section perpendicular to the pipe axis direction of the pipe main body 10 is a circular shape. The pipe main body 10 includes a first end portion 10A and a second end portion 10B. The first end portion 10A is an end portion on the opposite side to the second end portion 10B. In the T&C type oil-well metal pipe 1 illustrated in FIG. 2, the pipe main body 10 includes a pin tube body 11 and a coupling 12. The coupling 12 is attached to one end of the pin tube body 11. More specifically, the coupling 12 is fastened by threading to one end of the pin tube body 11.

FIG. 3 is a partial cross-sectional view illustrating a cross section (longitudinal cross section) parallel to the pipe axis direction of the coupling 12 of the oil-well metal pipe 1 illustrated in FIG. 2. Referring to FIG. 2 and FIG. 3, the pipe main body 10 includes a pin 40 and a box 50. The pin 40 is formed at the first end portion 10A of the pipe main body 10. When performing fastening, the pin 40 is inserted into the box of another oil-well metal pipe (not illustrated), and is fastened by threading to the box of the other oil-well metal pipe.

The box 50 is formed at the second end portion 10B of the pipe main body 10. When performing fastening, the pin of another oil-well metal pipe 1 is inserted into the box 50, and the box 50 is fastened by threading to the pin of the other oil-well metal pipe 1.

### [Regarding structure of pin 40]

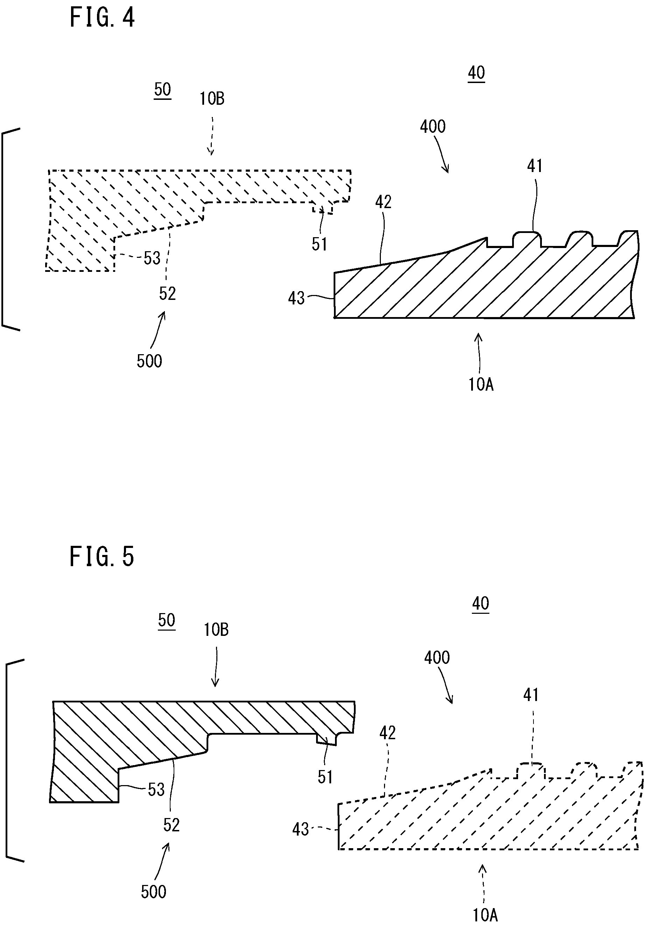

FIG. 4 is a cross-sectional view of a portion in the vicinity of the pin 40 of the oil-well metal pipe 1 illustrated in FIG. 3, which is a cross-sectional view parallel to the pipe axis direction of the oil-well metal pipe 1. A dashed line portion in FIG. 4 represents the structure of the box 50 of another oil-well metal pipe in the case of fastening the oil-well metal pipe 1 to another oil-well metal pipe 1. Referring to FIG. 4, the pin 40 includes a pin contact surface 400 on the outer peripheral surface of the first end portion 10A of the pipe main body 10. The pin contact surface 400 contacts the box contact surface 500 of the box 50 of the other oil-well metal pipe 1 when performing fastening to the other oil-well metal pipe 1.

The pin contact surface 400 includes at least an external thread part 41 formed on the outer peripheral surface of the first end portion 10A. The pin contact surface 400 may further include a pin sealing surface 42 and a pin shoulder surface 43. In FIG. 4, on the outer peripheral surface of the first end portion 10A, the pin sealing surface 42 is disposed further on the front end side of the first end portion 10A than the external thread part 41. In other words, the pin sealing surface 42 is disposed between the external thread part 41 and the pin shoulder surface 43. The pin sealing surface 42 is provided in a tapered shape. Specifically, the outer diameter of the pin sealing surface 42 gradually decreases from the external thread part 41 toward the pin shoulder surface 43 in the longitudinal direction (pipe axis direction) of the first end portion 10A.

When performing fastening with another oil-well metal pipe 1, the pin sealing surface 42 contacts a box sealing surface 52 (described later) of the box 50 of the other oil-well metal pipe 1. More specifically, during fastening, when the pin 40 is inserted into the box 50 of the other oil-well metal pipe 1, the pin sealing surface 42 contacts the box sealing surface 52. Subsequently, when the pin 40 is screwed further into the box 50 of the other oil-well metal pipe 1, the pin sealing surface 42 closely contacts the box sealing surface 52. By this means, during fastening, the pin sealing surface 42 closely contacts the box sealing surface 52 to thereby form a seal that is based on metal-to-metal contact. Therefore, the gastightness can be increased in the oil-well metal pipes 1 that are fastened to each other.

In FIG. 4, the pin shoulder surface 43 is disposed at the front end face of the first end portion 10A. In other words, in the pin 40 illustrated in FIG. 4, the external thread part 41, the pin sealing surface 42 and the pin shoulder surface 43 are disposed sequentially in that order from the center of the pipe main body 10 toward the front end of the first end portion 10A. During fastening to the other oil-well metal pipe 1, the pin shoulder surface 43 opposes and contacts a box shoulder surface 53 (described later) of the box 50 of the other oil-well metal pipe 1. More specifically, during fastening, the pin shoulder surface 43 contacts the box shoulder surface 53 as a result of the pin 40 being inserted into the box 50 of the other oil-well metal pipe 1. By this means, during fastening, a high torque can be obtained. Further, the positional relation between the pin 40 and the box 50 in the fastening state can be stabilized.

Note that, the pin contact surface 400 of the pin 40 includes at least the external thread part 41. In other words, the pin contact surface 400 includes the external thread part 41, and need not include the pin sealing surface 42 and the pin shoulder surface 43. The pin contact surface 400 may include the external thread part 41 and the pin shoulder surface 43, and need not include the pin sealing surface 42. The pin contact surface 400 may include the external thread part 41 and the pin sealing surface 42, and need not include the pin shoulder surface 43. In the case of an oil-well metal pipe having a wedge thread that is described above, the pin 40 does not have the pin shoulder surface 43. Note that, in a case where the pin 40 does not have the pin shoulder surface 43, the box 50 does not have the box shoulder surface 53.

### [Regarding structure of box 50]

FIG. 5 is a cross-sectional view of a portion in the vicinity of the box 50 of the oil-well metal pipe 1 illustrated in FIG. 3, which is a cross-sectional view parallel to the pipe axis direction of the oil-well metal pipe 1. A dashed line portion in FIG. 5 represents the structure of the pin 40 of another oil-well metal pipe 1 in the case of fastening the oil-well metal pipe 1 to another oil-well metal pipe 1. Referring to FIG. 5, the box 50 includes a box contact surface 500 on the inner peripheral surface of the second end portion 10B of the pipe main body 10. When performing fastening to another oil-well metal pipe 1, the box contact surface 500 contacts the pin contact surface 400 of the pin 40 of the other oil-well metal pipe 1 when the pin 40 is screwed into the box 50.

The box contact surface 500 includes at least an internal thread part 51 formed on the inner peripheral surface of the second end portion 10B. When performing fastening, the internal thread part 51 engages with the external thread part 41 of the pin 40 of the other oil-well metal pipe.

The box contact surface 500 may further include the box sealing surface 52 and the box shoulder surface 53. In FIG. 5, on the inner peripheral surface of the second end portion 10B, the box sealing surface 52 is disposed further on the pipe main body 10 side than the internal thread part 51. In other words, the box sealing surface 52 is disposed between the internal thread part 51 and the box shoulder surface 53. The box sealing surface 52 is provided in a tapered shape. Specifically, the inner diameter of the box sealing surface 52 gradually decreases from the internal thread part 51 toward the box shoulder surface 53 in the longitudinal direction (pipe axis direction) of the second end portion 10B.

When performing fastening to another oil-well metal pipe 1, the box sealing surface 52 contacts the pin sealing surface 42 of the pin 40 of the other oil-well metal pipe 1. More specifically, during fastening, when the pin 40 of the other oil-well metal pipe 1 is screwed into the box 50, the box sealing surface 52 contacts the pin sealing surface 42, and when the pin 40 is screwed in further, the box sealing surface 52 closely contacts the pin sealing surface 42. By this means, during fastening, the box sealing surface 52 closely contacts the pin sealing surface 42 to thereby form a seal that is based on metal-to-metal contact. Therefore, the gastightness can be increased in the oil-well metal pipes 1 that are fastened to each other.

The box shoulder surface 53 is disposed closer to the center of the pipe main body 10 in the pipe axial direction than the box sealing surface 52. In other words, in the box 50, the box shoulder surface 53, the box sealing surface 52 and the internal thread part 51 are disposed sequentially in that order from the center of the pipe main body 10 toward the front end of the second end portion 10B in the pipe axial direction. When performing fastening to another oil-well metal pipe 1, the box shoulder surface 53 opposes and contacts the pin shoulder surface 43 of the pin 40 of the other oil-well metal pipe 1. More specifically, during fastening, the box shoulder surface 53 contacts the pin shoulder surface 43 as a result of the pin 40 of the other oil-well metal pipe 1 being inserted into the box 50. By this means, during fastening, a high torque can be obtained. Further, the positional relation between the pin 40 and the box 50 in the fastening state can be stabilized.

The box contact surface 500 includes at least the internal thread part 51. When performing fastening, the internal thread part 51 of the box contact surface 500 of the box 50 contacts the external thread part 41 of the pin contact surface 400 of the pin 40 in a manner such that the internal thread part 51 corresponds with the external thread part 41. The box sealing surface 52 contacts the pin sealing surface 42 in a manner such that the box sealing surface 52 corresponds with the pin sealing surface 42. The box shoulder surface 53 contacts the pin shoulder surface 43 in a manner such that the box shoulder surface 53 corresponds with the pin shoulder surface 43.

In a case where the pin contact surface 400 includes the external thread part 41 and does not include the pin sealing surface 42 and the pin shoulder surface 43, the box contact surface 500 includes the internal thread part 51 and does not include the box sealing surface 52 and the box shoulder surface 53. In a case where the pin contact surface 400 includes the external thread part 41 and the pin shoulder surface 43 and does not include the pin sealing surface 42, the box contact surface 500 includes the internal thread part 51 and the box shoulder surface 53 and does not include the box sealing surface 52. In a case where the pin contact surface 400 includes the external thread part 41 and the pin sealing surface 42 and does not include the pin shoulder surface 43, the box contact surface 500 includes the internal thread part 51 and the box sealing surface 52 and does not include the box shoulder surface 53.

The pin contact surface 400 may include a plurality of the external thread parts 41, may include a plurality of the pin sealing surfaces 42, and may include a plurality of the pin shoulder surfaces 43. For example, the pin shoulder surface 43, the pin sealing surface 42, the external thread part 41, the pin sealing surface 42, the pin shoulder surface 43, the pin sealing surface 42 and the external thread part 41 may be disposed in that order on the pin contact surface 400 of the pin 40 in the direction from the front end of the first end portion 10A toward the center of the pipe main body 10. In such case, the internal thread part 51, the box sealing surface 52, the box shoulder surface 53, the box sealing surface 52, the internal thread part 51, the box sealing surface 52 and the box shoulder surface 53 are disposed in that order on the box contact surface 500 of the box 50 in the direction from the front end of the second end portion 10B toward the center of the pipe main body 10.

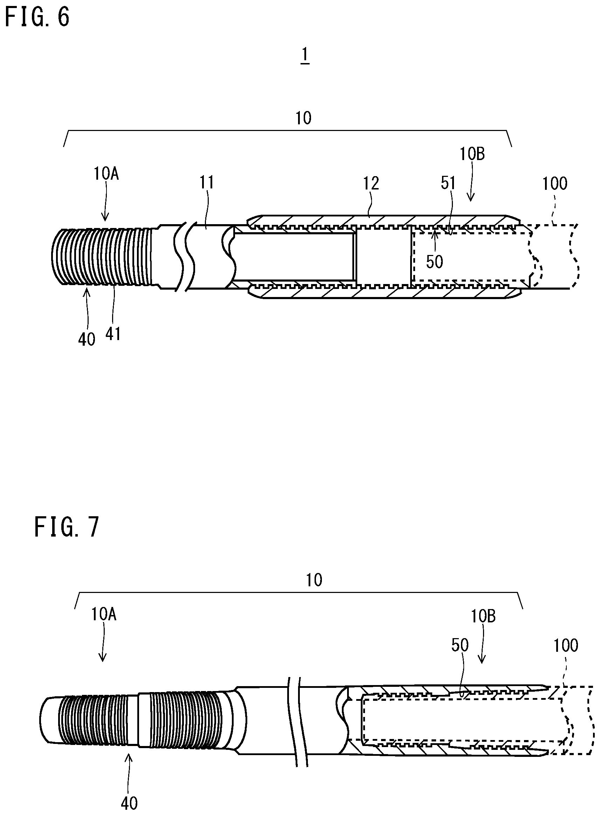

In FIG. 4 and FIG. 5 a so-called "premium joint" is illustrated in which the pin 40 includes the external thread part 41, the pin sealing surface 42 and the pin shoulder surface 43, and the box 50 includes the internal thread part 51, the box sealing surface 52 and the box shoulder surface 53. However, as described above, the pin 40 may include the external thread part 41 and need not include the pin sealing surface 42 and the pin shoulder surface 43. In this case, the box 50 includes the internal thread part 51 and does not include the box sealing surface 52 and the box shoulder surface 53. FIG. 6 is a view illustrating one example of the oil-well metal pipe 1 in which the pin 40 includes the external thread part 41 and does not include the pin sealing surface 42 and the pin shoulder surface 43, and the box 50 includes the internal thread part 51 and does not include the box sealing surface 52 and the box shoulder surface 53.

### [Case where oil-well metal pipe 1 is integral type]

The oil-well metal pipe 1 illustrated in FIG. 2, FIG. 3 and FIG. 6 is a so-called "T&C type" oil-well metal pipe 1, in which the pipe main body 10 includes the pin tube body 11 and the coupling 12. However, the oil-well metal pipe 1 according to the present embodiment may be an integral type instead of a T&C type.

FIG. 7 is a configuration diagram of an integral type oil-well metal pipe 1 according to the present embodiment. Referring to FIG. 7, the integral type oil-well metal pipe 1 includes a pipe main body 10. The pipe main body 10 includes a first end portion 10A and a second end portion 10B. The first end portion 10A is disposed on the opposite side to the second end portion 10B. As described above, in the T&C type oil-well metal pipe 1, the pipe main body 10 includes the pin tube body 11 and the coupling 12. In other words, in the T&C type oil-well metal pipe 1, the pipe main body 10 is constituted by fastening two separate members (the pin tube body 11 and the coupling 12). In contrast, in the integral type oil-well metal pipe 1, the pipe main body 10 is formed in an integral manner.

The pin 40 is formed at the first end portion 10A of the pipe main body 10. When performing fastening, the pin 40 is inserted in and screwed into the box 50 of another integral type oil-well metal pipe 1, and thereby fastened to the box 50 of the other integral type oil-well metal pipe 1. The box 50 is formed at the second end portion 10B of the pipe main body 10. When performing fastening, the pin 40 of another integral type oil-well metal pipe 1 is inserted in and screwed into the box 50, to thereby fasten the box 50 to the pin 40 of the other integral type oil-well metal pipe 1.

The structure of the pin 40 of the integral type oil-well metal pipe 1 is the same as the structure of the pin 40 of the T&C type oil-well metal pipe 1 illustrated in FIG. 4. Likewise, the structure of the box 50 of the integral type oil-well metal pipe 1 is the same as the structure of the box 50 of the T&C type oil-well metal pipe 1 illustrated in FIG. 5. Note that, in FIG. 7, in the pin 40, the pin shoulder surface, the pin sealing surface, the external thread part, the pin sealing surface, the pin shoulder surface, the pin sealing surface and the external thread part are disposed in that order from the front end of the first end portion 10A toward the center of the pipe main body 10 in the pipe axial direction. Therefore, in the box 50, the internal thread part, the box sealing surface, the box shoulder surface, the box sealing surface, the internal thread part, the box sealing surface and the box shoulder surface are disposed in that order from the front end of the second end portion 10B toward the center of the pipe main body 10 in the pipe axial direction. However, similarly to FIG. 4, it suffices that the pin contact surface 400 of the pin 40 of the integral type oil-well metal pipe 1 includes at least the external thread part 41. Further, similarly to FIG. 5, it suffices that the box contact surface 500 of the box 50 of the integral type oil-well metal pipe 1 includes at least the internal thread part 51.

In short, the oil-well metal pipe 1 of the present embodiment may be a T&C type or may be an integral type.

An oil-well metal pipe 1 may be a steel pipe made of Fe-based alloy or an alloy pipe represented by a Ni-base alloy pipe. The steel pipe is, for example, a low-alloy pipe, a martensitic stainless steel pipe, and a duplex stainless steel pipe.

### [Regarding structure on pin contact surface 400 or box contact surface 500]

In the oil-well metal pipe 1 of the present embodiment, a plating layer 60 is formed on a first contact surface, which is one of the pin contact surface 400 and the box contact surface 500, and in addition, a solid lubricant layer 70 is formed on the plating layer 60. Further, an arithmetic average roughness Ra of a second contact surface, which is the other of the pin contact surface 400 and the box contact surface 500, is within a range of 0.5 to 10.0 µm, and a semi-solid or liquid anti-rust coating 80 is formed on the second contact surface.

Hereunder, the structure on the first contact surface and the structure on the second contact surface in a case where the first contact surface is the box contact surface 500 and the second contact surface is the pin contact surface 400 will be described. However, the structure on the first contact surface and the structure on the second contact surface in a case where the first contact surface is the pin contact surface 400 and the second contact surface is the box contact surface 500 are the same as in the case described hereunder.

### [Structure on first contact surface]

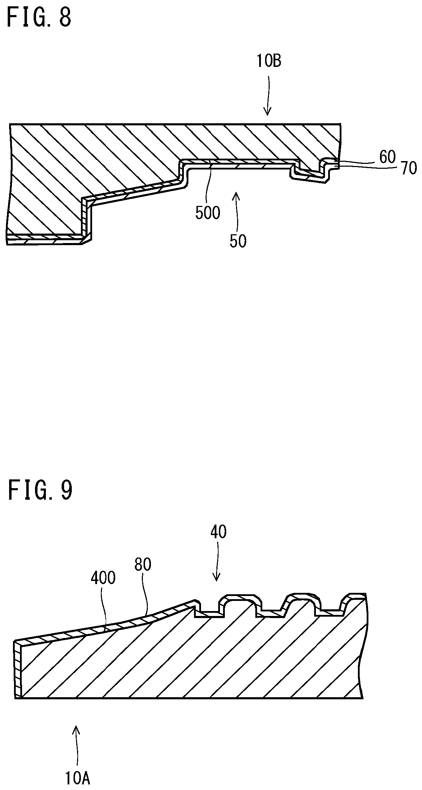

FIG. 8 is a cross-sectional view for describing the structure on the first contact surface in a case where the first contact surface is the box contact surface 500. Referring to FIG. 8, the plating layer 60 is formed on the first contact surface. In addition, the solid lubricant layer 70 is formed on the plating layer 60. Hereunder, the plating layer 60 and the solid lubricant layer 70 will be described.

### [Regarding plating layer 60]

The kind of the plating layer 60 is not particularly limited. The plating layer 60, for example, may be a Zn plating layer, an Ni plating layer, a Cu plating layer, a Zn-Ni alloy plating layer, a Zn-Co alloy plating layer, an Ni-W alloy plating layer, or a Cu-Sn-Zn alloy plating layer. The plating layer 60 may be formed by laminating a plurality of plating layers. For example, an Ni plating layer may be formed on the first contact surface, and a Zn-Ni plating layer may further be laminated and formed on the Ni plating layer.

In a case where the plating layer 60 is a Cu-Sn-Zn alloy plating layer, the chemical composition of the Cu-Sn-Zn alloy coating consists of, for example, Cu: 40 to 70 mass%, Sn: 20 to 50 mass%, and Zn: 2 to 20 mass%, with the balance being impurities. In a case where the plating layer 60 is a Cu plating layer, the chemical composition of the Cu plating layer consists of, for example, Cu and impurities.

Preferably, the plating layer 60 is composed of an Zn alloy plating composed of one or more types of element selected from the group consisting of Ni, Fe, Mg and Mn, and Zn. These Zn alloy platings have a high hardness and a high melting point. Therefore, these Zn alloy platings exhibit excellent galling resistance. In addition, because Zn is a baser metal than the steel material serving as the base metal of the pipe main body 10, Zn exhibits a sacrificial protection action. Therefore, in a case where the plating layer 60 is composed of a Zn alloy plating, the plating layer 60 also exhibits excellent corrosion resistance, and not just galling resistance.

Further preferably, the plating layer 60 is a Zn-Ni alloy plating layer. The Zn-Ni alloy plating layer is composed of a Zn-Ni alloy. The Zn-Ni alloy includes zinc (Zn) and nickel (Ni). The Zn-Ni alloy may sometimes contain impurities. In this case, the term "impurities" with respect to the Zn-Ni alloy means substances other than Zn and Ni which become contained in the Zn-Ni alloy plating layer during production or the like of the oil-well metal pipe, and which are substances whose content is within a range that does not influence the effects of the present embodiment. The Zn-Ni alloy not only has excellent corrosion resistance, but as described above, also has a high hardness and a high melting point, and therefore has excellent galling resistance.

In the Zn-Ni alloy plating layer, preferably, when the total of Zn and Ni is taken as 100 mass%, the proportion of Ni that is contained is within the range of 10 to 20 mass%. A preferable lower limit of the content of Ni in the Zn-Ni alloy plating layer is 11 mass%, and further preferably is 12 mass%. A preferable upper limit of the content of Ni in the Zn-Ni alloy plating layer is 18 mass%, more preferably is 16 mass%, and further preferably is 15 mass%.

### [Method of measuring chemical composition of Zn-Ni alloy plating layer]

In a case where the plating layer 60 is a Zn-Ni alloy plating layer, the chemical composition of the plating layer 60 can be measured from a cross section of the plating layer by using an energy dispersive X-ray (EDX) spectroscope. With regard to the control of operations during production, measurement that can be performed non-destructively and simply is preferable. Therefore, measurement of the chemical composition of the Zn-Ni alloy plating layer, for example, may be performed from the plating layer surface using a fluorescent X-ray analyzer. In this case, correction is performed as appropriate using a standard sample whose chemical composition has been ascertained in advance.

### [Thickness of plating layer 60]

The thickness of the plating layer 60 is not particularly limited. The thickness of the plating layer 60 is, for example, within the range of 1 to 20 µm. If the thickness of the plating layer 60 is 1 µm or more, sufficient galling resistance can be obtained. On the other hand, if the thickness of the plating layer 60 is more than 20 µm, the aforementioned effects will be saturated. The lower limit of the thickness of the plating layer 60 is preferably 3 µm, and more preferably is 5 µm. The upper limit of the thickness of the plating layer 60 is preferably 18 µm, and more preferably is 15 µm.

The thickness of the plating layer 60 can be measured by the following method. A sample including a cross section of the plating layer 60 is extracted. The thickness of the plating layer 60 is then measured at an arbitrary three places on the cross section of the plating layer 60. The arithmetic mean value of the measured thicknesses is defined as the thickness (µm) of the plating layer 60. Apart from the aforementioned method, the thickness of the plating layer 60 may also be measured from the plating layer surface using a fluorescent X-ray analyzer, similarly to the measurement of the chemical composition of the plating layer that is described above. In this case, correction is performed as appropriate using a standard sample whose chemical composition has been ascertained in advance.

### [Solid lubricant layer 70]

The solid lubricant layer 70 is further formed on the plating layer 60. During fastening, the solid lubricant layer 70 increases the lubricity of the box 50 and the pin 40 of the oil-well metal pipe 1. The solid lubricant layer 70 is a solid coating at normal temperature (20°C ± 15°C).

The terms "solid", "semi-solid" and "liquid" as used in the present description are defined as follows, respectively. The term "solid" means a state in which the shape is fixed at normal temperature, and even when an external force is applied, the shape is maintained without changing or at least one part breaks. The term "semi-solid" means a state in which, although a certain shape is maintained at normal temperature, in a case where an external force is applied, at least a portion that receives the external force easily changes shape without breaking. In the present description, a grease state and a semi-dry state are included in the scope of the definition of semi-solid. The term "liquid" means the state of a liquid. Note that, a state in a case where volatile components of a liquid evaporate and non-volatile components having viscosity remain also corresponds to a "semi-solid or a liquid".

The solid lubricant layer 70 contains, for example, a solid lubricant powder and a binder that serves as a matrix. In other words, the solid lubricant layer 70 is a layer made from a heterogenous-system coating in which solid lubricant powder is bonded with a binder.

### [Solid lubricant powder]

A solid lubricant powder is a powder that exhibits a lubrication action. A well-known material that is conventionally utilized as a solid lubricant can be used as the solid lubricant powder. A material which does not adversely affect the environment is preferable as the solid lubricant powder.

Preferable solid lubricant powder contains one or more types selected from a group consisting of molybdenum sulfide (MoS₂), tungsten disulfide (WS₂), graphite or boron nitride (BN), carbon black, polytetrafluoroethylene (PTFE) powder, and graphitic fluoride (CF_{X}). Molybdenum sulfide (MoS₂) and tungsten disulfide (WS₂) are inorganic powders having a graphitic crystalline structure. The mean particle diameter of the solid lubricant powder is not particularly limited. The mean particle diameter of the solid lubricant powder is, for example, within the range of 0.5 to 15 µm.

In the solid lubricant layer 70, the preferred mass ratio of the total amount of solid lubricant powder to the total amount of the binder falls within the range of 0.3 to 0.9. If the mass ratio of the total amount of solid lubricant powder to the total amount of the binder is 0.3 or more, the galling resistance of the solid lubricant layer 70 further increases. If the mass ratio of the total amount of solid lubricant powder to the total amount of the binder is 0.9 or less, the adhesiveness of the solid lubricant layer 70 further increases and the strength of the solid lubricant layer 70 further increases.

The solid lubricant layer 70 can further contain another powder other than a solid lubricant powder. For example, the solid lubricant layer 70 contains the solid lubricant powder and silica. The other powder is, for example, an inorganic powder that does not have a graphitic crystalline structure. When the solid lubricant layer 70 contains the solid lubricant powder and the other powder, the preferred mass ratio of the total amount of the solid lubricant powder and the other powder to the total amount of the binder is 0.9 or less.

### [Binder]

The binder in the solid lubricant layer 70 consists of an organic resin and/or an inorganic macromolecular compound.

An organic resin as the binder is preferably an organic resin which has heat resistance, moderate hardness and moderate abrasiveness. An organic resin as the binder consists of, for example, one or more types selected from the group consists of a thermosetting resin and a thermoplastic resin. The organic resin consists of one or more types selected from the group consisting of epoxy resin, polyimide resin, polyamide-imide resin, polycarbodiimide resin, polyether sulfone, polyether ether ketone, phenol resin and furan resin, polyvinyl resin, acrylic resin and polyurethane resin, polyethylene resin, silicone resin and fluororesin.

From the viewpoint of enhancing the adhesiveness of the solid lubricant layer 70, the solid lubricant layer 70 may be formed by performing a heat curing process on a liquid composition that is raw material for the solid lubricant layer 70 and contains a solid lubricant powder and a binder (hereinafter referred to as an organic liquid composition). The temperature of the heat curing treatment is preferably 80°C or more, and more preferably is within the range of 150 to 380°C. The treatment time is preferably 5 mins or more, and more preferably is 20 to 60 mins. The heat curing process may include a pre-drying process and a baking process. In the pre-drying process, the temperature is maintained at 80-100°C for 2-15 minutes. The baking process is performed after the pre-drying process. In the baking process, the temperature is maintained at 150-380°C for 10-50 minutes.

An inorganic macromolecular compound as the binder is, for example, a compound having a structure in which metal-oxygen bonds are three-dimensionally cross-linked, such as Ti-O, Si-O, Zr-O, Mn-O, Ce-O or Ba-O. Such kind of inorganic macromolecular compounds can be formed by hydrolysis and condensation of a hydrolyzable metal compound such as metal alkoxide or metal chloride. The inorganic macromolecular compound may be formed using a hydrolyzable metal compound containing a functional group such as an amine or epoxy group. A hydrolyzable metal compound containing a functional group such as an amine or epoxy group is, for example, a silane coupling agent or a titanate coupling agent.

When an inorganic macromolecular compound is contained as a binder, the solid lubricant layer 70 is formed, for example, by the following method. A liquid composition containing a solvent of a hydrolyzable metal compound or a partial hydrolysate thereof and a solid lubricant powder (hereinafter referred to as an inorganic liquid composition) is applied on the plating layer 60. The applied liquid composition is subjected to a humidification treatment and/or heating treatment. By the above processes, the solid lubricant layer 70 containing an inorganic macromolecular compound as a binder is formed.

As described above, a humidification treatment may be performed to promote hydrolysis of a hydrolyzable metal compound. In the humidification treatment, the applied liquid composition is left in atmospheric air, preferably in a humidified atmosphere with a relative humidity of 70% or more for a predetermined period of time. Preferably, heating is performed after the humidification treatment. Condensation of hydrolysate produced by hydrolysis of the metal compound, and discharge of a byproduct (water) of condensation of a byproduct (alcohol in a case where the metal compound is metal alkoxide) of the hydrolysis are promoted by heating. As a result, the solid lubricant layer 70 can be formed in a short period. Further, by performing heating after the humidification treatment, the adhesiveness of the solid lubricant layer 70 that is formed becomes firm. The heating after the humidification treatment is preferably performed after solvent that remained in the coating film evaporated. The heating temperature for the heating after the humidification treatment is preferably set to a temperature within the range of 50 to 200°C that is close to the boiling point of alcohol which is produced as a byproduct. Heating within a hot-blast stove is additionally effective.

The thickness of the solid lubricant layer 70 is 3 to 50 µm. A preferable thickness of the solid lubricant layer 70 is 10 to 40 µm. When the thickness of the solid lubricant layer 70 is 10 µm or more, a high lubricity can be obtained with further consistency. On the other hand, when the thickness of the solid lubricant layer 70 is 40 µm or less, the adhesiveness of the solid lubricant layer 70 is further consistent. Furthermore, when the thickness of the solid lubricant layer 70 is 40 µm or less, the thread tolerance (clearance) of the sliding surfaces widens. In this case, the interfacial pressure during sliding becomes lower. Therefore, the fastening torque can be inhibited from becoming excessively high. Accordingly, a preferable thickness of the solid lubricant layer 70 is within the range of 10 to 40 µm. A more preferable lower limit of the thickness of the solid lubricant layer 70 is 15 µm, and further preferably is 20 µm. A more preferable upper limit of the thickness of the solid lubricant layer 70 is 35 µm, and further preferably is 30 µm.

The thickness of the solid lubricant layer 70 is measured by the following method. A sample that includes the first contact surface on which the solid lubricant layer 70 is formed is extracted. One surface among the surfaces of the sample corresponds to a cross section cut perpendicularly to the axial direction (longitudinal direction) of the oil-well metal pipe. Hereunder, this cross section is referred to as "observation surface". In the observation surface, a region including the solid lubricant layer 70 is subjected to microscopic observation. The magnification ratio for the microscopic observation is set to x500. The thickness of the solid lubricant layer 70 in an arbitrary 10 visual fields is determined. In each visual field, the thickness of the solid lubricant layer 70 at an arbitrary three locations is measured. The arithmetic mean value of the thicknesses of the solid lubricant layer 70 in the 10 visual fields (total 10×3 = 30 thickness values) is defined as the thickness (µm) of the solid lubricant layer 70.

### [Structure on second contact surface]

FIG. 9 is a cross-sectional view for describing the structure on the second contact surface in a case where the second contact surface is the pin contact surface 400. Referring to FIG. 9, the arithmetic average roughness Ra of the second contact surface is within the range of 0.5 to 10.0 µm. Further, the semi-solid or liquid anti-rust coating 80 is formed on the second contact surface (in FIG. 9, on the pin contact surface 400). Hereunder, the arithmetic average roughness Ra and the anti-rust coating 80 of the second contact surface will be described.

### [Arithmetic average roughness Ra of the second contact surface]

The arithmetic average roughness Ra of the second contact surface (in FIG. 9, the pin contact surface 400) is measured by a method for measuring arithmetic average roughness that is defined in JIS B 0601 (2013). Specifically, an arbitrary 10 locations along the extending direction of the thread ridge (cutting direction of the thread) of the thread part on the second contact surface are adopted as measurement locations. At each measurement location, the arithmetic average roughness Ra over an evaluation length extending in the pipe axis direction is measured. The evaluation length is set to a multiple of five times the sampling length (cut-off wavelength). Measurement of the arithmetic average roughness Ra is performed using a stylus type roughness meter, and the measurement speed is set to 0.5 mm/sec. Among the 10 values for arithmetic average roughness Ra that are determined, the arithmetic mean value of the values for the arithmetic average roughness Ra at six locations that exclude the largest arithmetic average roughness Ra, the second largest arithmetic average roughness Ra, the smallest arithmetic average roughness Ra and the second smallest arithmetic average roughness Ra is defined as the arithmetic average roughness Ra. For example, a surface roughness tester with the trade name SURFTEST SJ-301 manufactured by Mitutoyo Corporation is used as the contact-type roughness meter.

The arithmetic average roughness of the second contact surface after being threaded is less than 0.1 µm. In a case where the arithmetic average roughness Ra of the second contact surface is within the range of 0.5 to 10.0 µm, the roughness of the second contact surface is adjusted by subjecting the second contact surface to some type of surface treatment. The surface treatment is, for example, a blasting treatment.

Preferably, the second contact surface is subjected to a blasting treatment. The term "blasting treatment" refers to a treatment in which a blasting apparatus is used to cause a blast material (an abrasive) to collide against the second contact surface. The blasting treatment is, for example, a sand blasting treatment, a shot blasting treatment or a grit blasting treatment. The blasting treatment is a treatment in which a blast material (abrasive) is mixed with compressed air and the mixture is propelled onto the second contact surface. The roughness of the second contact surface can be appropriately set by adjusting the blast material used in the blasting treatment as well as the propelling speed and the like.

### [Anti-rust coating 80]

The anti-rust coating 80 is formed on the second contact surface. The anti-rust coating 80 is semi-solid or liquid at normal temperature (20°C ± 15°C).

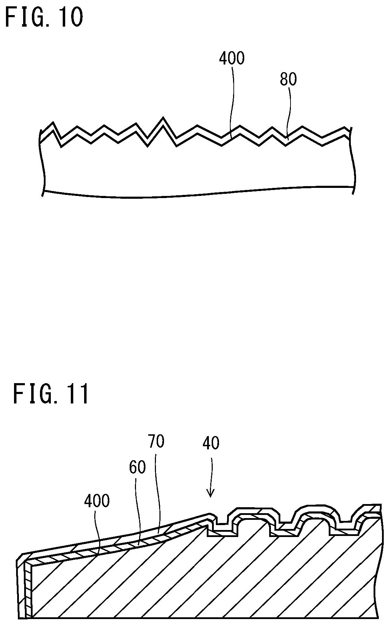

FIG. 10 is an enlarged view of a portion in the vicinity of the second contact surface illustrated in FIG. 9 (in FIG. 9, the pin contact surface 400). Referring to FIG. 10, minute unevenness of an extent such that the arithmetic average roughness Ra falls within the range of 0.5 to 10 µm is formed on the second contact surface (in this case, the pin contact surface 400). By means of this unevenness, the coefficient of friction between the pin contact surface 400 and the box contact surface 500 during fastening is increased, and the yield torque is increased.

### [Types of anti-rust coating 80]

The anti-rust coating 80 may be either one of the following two types.
(A) A liquid anti-rust coating
(B) A semi-solid anti-rust coating

Hereunder, a liquid anti-rust coating and a semi-solid anti-rust coating are described.

### [(A) Regarding liquid anti-rust coating]

A liquid anti-rust coating is an anti-rust coating that is in a liquid state. The term "liquid" means the state of a liquid. Note that, a state in a case where volatile components of a liquid evaporate and non-volatile components having viscosity remain also corresponds to a "semi-solid or a liquid". A liquid anti-rust coating can be formed, for example, by applying a commercially available anti-rust lubricant that is also referred to as "light oil", such as WD-40 (trade name). The chemical composition of the liquid anti-rust coating contains, for example, a mineral spirit in an amount of 50 to 75 mass%, and a petroleum-based oil in an amount of 25 mass% or less.

### [Mineral spirit]

The mineral spirit is a solvent that is equivalent to industrial gasoline No. 4 defined in JIS K 2201 (1991). A preferable lower limit of the content of the mineral spirit is, in mass%, 52%, more preferably is 54%, further preferably is 56%, and further preferably is 58%. A preferable upper limit of the content of the mineral spirit is, in mass%, 70%, more preferably is 68%, further preferably is 66%, more preferably is 64%, and further preferably is 62%.

### [Petroleum-based oil]

The petroleum-based oil is oil obtained by refining crude oil. The petroleum-based oil is composed of, for example, one or more types selected from the group consisting of a paraffinic oil, a naphthenic oil and an aromatic oil. A preferable lower limit of the content of the petroleum-based oil is, in mass%, 2%, more preferably is 4%, further preferably is 6%, and further preferably is 8%. A preferable upper limit of the content of the petroleum-based oil is 22%, more preferably is 20%, further preferably is 18%, and further preferably is 16%.

### [Anti-rust addition agent]

The anti-rust coating 80 may also include an anti-rust addition agent in addition to a mineral spirit and a petroleum-based oil. The term "anti-rust addition agent" is a generic term for addition agents that have corrosion resistance. The anti-rust addition agent contains, for example, one or more types selected from the group consisting of aluminum tripolyphosphate, aluminum phosphite, and calcium ion-exchanged silica. Preferably, the anti-rust addition agent contains at least one type of addition agent selected from the group consisting of calcium ion-exchanged silica and aluminum phosphite. Other well-known (commercially available) reactive water repellent agents may also be contained as the anti-rust addition agent.

The content of the anti-rust addition agent in the anti-rust coating 80 is preferably, in mass%, 10% or less. A preferable upper limit of the anti-rust addition agent in the anti-rust coating 80 is 9%, more preferably is 8%, and further preferably is 5%. A preferable lower limit of the anti-rust addition agent in the anti-rust coating 80 is 2%, and further preferably is 3%. Note that, the anti-rust coating 80 need not contain the anti-rust addition agent. In other words, the chemical composition of the anti-rust coating 80 may contain a mineral spirit and a petroleum-based oil, with the balance being impurities.

Note that, the anti-rust coating 80 substantially does not contain heavy metal powder. In other words, in the anti-rust coating 80, a heavy metal is an impurity. A heavy metal powder is, for example, powder or particles of Pb, Cu, Zn or the like. The anti-rust coating 80 also does not contain a chlorine compound. Therefore, the oil-well metal pipe of the present embodiment can also be used in a marine oil well for which the use of a grease containing a heavy metal or a chlorine compound or the like is prohibited.

### [(B) Regarding semi-solid anti-rust coating]

A semi-solid anti-rust coating is an anti-rust coating in a state such that although the coating maintains a certain shape at a normal temperature, when an external force is applied, at least a portion that receives the external force easily changes shape without breaking (without cracks occurring). The semi-solid anti-rust coating may be in a grease state or may be in a semi-dry state.

The chemical composition of the semi-solid anti-rust coating contains, for example, in mass%, refined mineral oil: 20 to 30%, petroleum-based wax: 8 to 13%, graphite: 3 to 5%, and rosin: 5 to 10%, with the balance being Ca sulfonate and impurities.

A refined mineral oil is a hydrocarbon compound obtained by refining petroleum oil or natural gas or the like. A petroleum-based wax is a wax obtained from petroleum oil. The term "wax" means organic matter which is a solid at normal temperature and which becomes a liquid when heat is imparted thereto. Rosin is a resin obtained by subjecting colophony to steam distillation to exclude turpentine oil therefrom.

Note that, the semi-solid anti-rust coating may be a well-known yellow dope or a well-known green dope.

The anti-rust coating 80 is in a semi-solid state or a liquid state. Therefore, in comparison to a case of forming a solid coating, a special apparatus is not normally required when forming the anti-rust coating 80 on the second contact surface. Depending on the properties of the anti-rust coating 80 and the specifications, drying by heating may be performed.

The anti-rust coating 80 that is formed on the second contact surface is in a semi-solid state or a liquid state. When the oil-well metal pipe is fastened, the semi-solid or liquid anti-rust coating 80 changes shape or flows accompanying the fastening. As a result, the roughness of the surface of the anti-rust coating 80 formed on the second contact surface is substantially equal to the surface roughness of the second contact surface.

Note that, a plating layer is not formed on the second contact surface. If a plating layer is formed on the second contact surface that is a roughened surface, and the anti-rust coating 80 is formed on the plating layer that was formed, the unevenness of the second contact surface will not be reflected on the surface of the plating layer. In other words, the surface roughness of the plating layer will be less than the surface roughness of the second contact surface. Therefore, it will not be possible to adequately increase the yield torque during fastening. Further, if a plating layer is formed on the second contact surface and the surface of the plating layer is then roughened, and thereafter the anti-rust coating 80 is formed, the production cost will increase. Therefore, in the oil-well metal pipe of the present embodiment, a plating layer is not formed on the second contact surface.

### [Case where pin contact surface is first contact surface, and box contact surface is second contact surface]

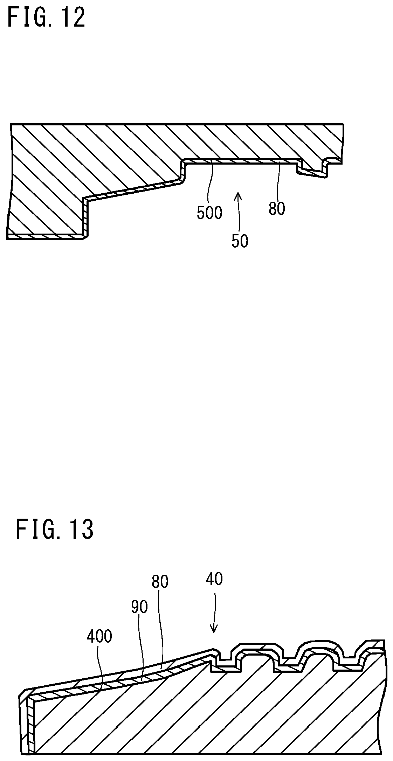

In the foregoing description, the structures of the first and second contact surfaces have been described taking the box contact surface 500 as the first contact surface and taking the pin contact surface 400 as the second contact surface. However, as described above, the pin contact surface 400 may be the first contact surface and the box contact surface 500 may be the second contact surface. In this case, as illustrated in FIG. 11, the plating layer 60 is formed on the pin contact surface 400 (the first contact surface), and the solid lubricant layer 70 is formed on the plating layer 60. Further, as illustrated in FIG. 12, adjustment of the roughness of the surface of the box contact surface 500 (the second contact surface) is performed, and the arithmetic average roughness Ra of the box contact surface 500 is 0.5 to 10.0 µm. Further, the anti-rust coating 80 is formed on the box contact surface 500.

As described above, in the oil-well metal pipe 1 of the present embodiment, the plating layer 60 is formed on the first contact surface, which is one of the pin contact surface 400 and the box contact surface 500, and the solid lubricant layer 70 is formed on the plating layer 60. Further, the surface of the second contact surface that opposes the first contact surface during fastening is roughened, and the arithmetic average roughness Ra of the second contact surface is 0.5 to 10.0 µm. Further, the semi-solid or liquid anti-rust coating is formed on the second roughened contact surface. The galling resistance during fastening can be enhanced by the plating layer 60 and the solid lubricant layer 70 of the first contact surface. In addition, in a case where the semi-solid or liquid anti-rust coating 80 is formed on the second contact surface that is a roughened surface, a high coefficient of friction is obtained by means of the plating layer 60 under the solid lubricant layer 70 of the first contact surface and the unevenness of the second contact surface. As a result, the yield torque increases.

### [Regarding chemical treatment coating 90 formed on second contact surface]

In the oil-well metal pipe 1 of the present embodiment, a chemical treatment coating may further be formed on the second contact surface, and the anti-rust coating 80 may be formed on the chemical treatment coating. FIG. 13 is a view illustrating the structure of the second contact surface that includes a chemical treatment coating 90, in a case where the second contact surface is the pin contact surface 400. Referring to FIG. 13, the chemical treatment coating 90 is formed on the second contact surface whose roughness was adjusted so that the arithmetic average roughness Ra was within the range of 0.5 to 10.0 µm, and the anti-rust coating 80 is formed on the chemical treatment coating 90. At this time, the chemical treatment coating 90 is formed in contact with the second contact surface, and the anti-rust coating 80 is formed in contact with the chemical treatment coating 90.

The chemical treatment coating 90 is, for example, composed of one or more types of coating selected from the group consisting of a phosphate chemical treatment coating, an oxalate chemical treatment coating and a borate chemical treatment coating. Preferably, the chemical treatment coating 90 is a phosphate chemical treatment coating.

The chemical treatment coating 90 is porous. Therefore, when the anti-rust coating 80 is formed on the chemical treatment coating 90, the adhesiveness (retaining power) of the second contact surface of the anti-rust coating 80 increases because of the so-called "anchor effect". In this case, the corrosion resistance of the second contact surface increases. The thickness of the chemical treatment coating 90 is not particularly limited. A preferable thickness of the chemical treatment coating 90 is 5 to 40 µm. If the thickness of the chemical treatment coating 90 is 5 µm or more, the corrosion resistance is further enhanced. If the thickness of the chemical treatment coating is 40 µm or less, the adhesiveness of the anti-rust coating 80 increases with additional consistency.

Note that, in FIG. 13 a case is illustrated in which the second contact surface is the pin contact surface 400. However, even when the second contact surface is the box contact surface 500, the chemical treatment coating 90 may be similarly formed on the second contact surface, and the anti-rust coating 80 may be formed on the chemical treatment coating 90.

Note that, the anti-rust coating 80 may be formed in direct contact with the second contact surface, and the chemical treatment coating 90 may not be formed on the second contact surface. Preferably, in a case where the content of Cr is, in mass%, 1.00% or less in the chemical composition of the oil-well metal pipe 1, the chemical treatment coating 90 is formed on the second contact surface, and the anti-rust coating 80 is formed on the chemical treatment coating 90. In a case when the content of Cr is, in mass%, 1.00% or less in the chemical composition of the oil-well metal pipe 1, the corrosion resistance of the base metal itself of the oil-well metal pipe 1 is not so high. In a case when the content of Cr is, in mass%, 1.00% or less in the chemical composition of the oil-well metal pipe 1, if the chemical treatment coating 90 is formed on the second contact surface and, furthermore, the anti-rust coating 80 is formed on the chemical treatment coating 90, the corrosion resistance of the second contact surface can be increased.

### [Production process]

One example of a method for producing the oil-well metal pipe of the present embodiment having the above structure will now be described. Note that, the production method described hereunder is one example of a method for producing the oil-well metal pipe of the present embodiment. Accordingly, the production method is not particularly limited as long as the production method can produce the oil-well metal pipe of the present embodiment. The production method described hereunder is a favorable example of a method for producing the oil-well metal pipe of the present embodiment.

The method for producing the oil-well metal pipe of the present embodiment includes a process of preparing a hollow shell with a threaded connection (hollow shell with a threaded connection preparation process), a process of forming the plating layer 60 on the first contact surface (plating layer formation process), a process of forming solid lubricant layer 70 on the plating layer 60 (solid lubricant layer formation process), a process of adjusting the surface roughness of the second contact surface (second contact surface roughness adjustment process), and a process of forming an anti-rust coating on the second contact surface whose roughness was adjusted (anti-rust coating formation process). Each of these processes is described in detail hereunder.

### [Hollow shell with a threaded connection preparation process]

In the hollow shell with a threaded connection preparation process, a hollow shell with a threaded connection is prepared. Here, the term "hollow shell with a threaded connection" means the pipe main body 10. In a case where the oil-well metal pipe is the T&C type, the pipe main body 10 includes the pin tube body 11 and the coupling 12. In a case where the oil-well metal pipe is the integral type, the pipe main body 10 is formed in an integral manner.

A product supplied by a third party may be used as the pipe main body 10, or the pipe main body 10 may be prepared by producing the pipe main body 10. In the case of producing the pipe main body 10, the pipe main body 10 is produced, for example, by the following method.

A starting material is produced using molten steel. Specifically, a cast piece (a slab, bloom or billet) is produced by a continuous casting process using the molten steel. An ingot may also be produced by an ingot-making process using the molten steel. As necessary, the slab, bloom or ingot may be subjected to blooming to produce a cast piece (billet). The starting material (a slab, bloom or billet) is produced by the above process. The prepared starting material is subjected to hot working to produce a hollow shell. The hot working method may be piercing-rolling performed according to the Mannesmann process, or may be a hot-extrusion process. The hollow shell after hot working is subjected to well-known quenching and well-known tempering to adjust the strength of the hollow shell. A hollow shell is produced by the above process. Note that, in a case where the oil-well metal pipe is the T&C type, a hollow shell for the coupling 12 is also prepared. The method for producing the hollow shell for the coupling 12 is the same as the method for producing the hollow shell that is described above.

In a case where the oil-well metal pipe is the T&C type, threading is performed with respect to the outer surface of both end portions of the hollow shell for the pin tube body 11, to form the pin contact surface 400. In addition, threading is performed with respect to the inner surface of both end portions of the hollow shell for the coupling 12, to form the box contact surface 500. The pin of one end of the hollow shell for the pin tube body 11 is inserted in and screwed into the box of one end of the hollow shell for the coupling 12. The pipe main body including the pin tube body 11 and the coupling 12 (hollow shell with a threaded connection) is produced by the above process.

In a case where the oil-well metal pipe is the integral type, threading is performed with respect to the outer surface of the first end portion 10A of the hollow shell corresponding to the pipe main body 10 to form the pin contact surface 400. In addition, threading is performed with respect to the outer surface of the second end portion 10B of the hollow shell corresponding to the pipe main body 10 to form the box contact surface 500. The pipe main body 10 that includes a pin and a box (hollow shell with a threaded connection) is produced by the above process.

### [Plating layer formation process]

The plating layer 60 is formed on the first contact surface, which is one of the pin contact surface 400 and the box contact surface 500 of the prepared pipe main body. Formation of the plating layer 60 can be performed by a well-known method. Formation of the plating layer 60 may be performed using an electroplating method or may be performed using an electroless plating method.

For example, in the case of forming the plating layer 60 that is composed of a Zn-Ni alloy by an electroplating method, the plating bath contains zinc ions and nickel ions. The composition of the plating bath preferably contains zinc ions: 1 to 100 g/L and nickel ions: 1 to 50 g/L. The conditions for the electroplating method are, for example, plating bath pH: 1 to 10, plating bath temperature: 25 to 80°C, current density: 1 to 100 A/dm², and treatment time: 0.1 to 30 mins. For example, in the case of forming the plating layer 60 that is composed of a Cu-Sn-Zn alloy by an electroplating method, the plating bath contains copper ions: 1 to 50 g/L, tin ions: 1 to 50 g/L, and zinc ions: 1 to 50 g/L. The electroplating conditions may be the same as the aforementioned conditions for forming the plating layer 60 that is composed of a Zn-Ni alloy. In a case where the plating layer 60 is a plating layer composed of Cu or a Cu alloy, the plating layer 60 can be produced by a well-known method.

### [Solid lubricant layer formation process]

In the solid lubricant layer formation process, the solid lubricant layer 70 is formed on the plating layer 60. The solid lubricant layer formation process includes an application process and a curing process.

### [Application process]

In the application process, a composition for forming the solid lubricant layer 70 on the plating layer 60 is applied on the plating layer 60 by a well-known method.

For example, in a case where the composition is an organic liquid composition as describe above, the organic liquid composition is applied to the first contact surface by spray coating. In this case, the viscosity of the organic liquid composition is adjusted so that it can be applied by spray under normal temperature and normal pressure. Another application method, such as brushing or dipping may be employed instead of spray application as the application method. The same applies in a case where the composition is an inorganic liquid compound.

### [Curing process]

In a case where the composition is an organic liquid composition, in a curing process the applied organic liquid composition is cured to form the solid lubricant layer 70. The solid lubricant layer 70 is formed by drying and/or performing thermal curing of the resin solution for application that was applied on the plating layer 60. The drying and/or thermal curing can be performed by a well-known method in accordance with the type of binder. Favorable conditions and the like for performing this process are as described above. In a case where the composition is an inorganic liquid composition, as described above, the applied inorganic liquid composition is subjected to a humidification treatment and/or heating treatment in the curing process.

The solid lubricant layer 70 is formed on the plating layer 60 by carrying out the above application process and curing process.

### [Second contact surface roughness adjustment process]

In the second contact surface roughness adjustment process, the surface roughness of the second contact surface, which is one of the pin contact surface 400 and the box contact surface 500 of the main pipe body 10, is adjusted to make the arithmetic average roughness Ra of the second contact surface fall within the range of 0.5 to 10.0 µm.

Adjustment of the surface roughness is performed, for example, by performing a blasting treatment.

### [Blasting treatment]

The blasting treatment is a treatment in which a blasting apparatus is used to cause a blast material (an abrasive) to collide against the second contact surface to make the second contact surface rough. The blasting treatment is, for example, a sand blasting treatment. The sand blasting treatment is a treatment in which a blast material (abrasive) is mixed with compressed air and the mixture is propelled onto the second contact surface. Examples of the blast material include spherical shot material and angular grit material. The sand blasting treatment can be carried out by a well-known method. For example, air is compressed by a compressor, and the blast material is mixed with the compressed air. The blast material may be composed of, for example, stainless steel, aluminum, ceramic material, or alumina. The sand blasting treatment conditions such as the propelling speed can be set appropriately. By appropriately selecting the blast material used for the blasting treatment and appropriately adjusting the propelling speed and the like in the blasting treatment, the arithmetic average roughness Ra of the second contact surface can be adjusted to within the range of 0.5 to 10.0 µm.

### [Anti-rust coating formation process]

In the anti-rust coating formation process, an anti-rust lubricant agent for forming a semi-solid or liquid anti-rust coating is applied on the second contact surface of the pipe main body 10 after the second contact surface roughness adjustment process. The anti-rust coating is not a solid, and is in a semi-solid state or a liquid state. Therefore, if a semi-solid or liquid anti-rust lubricant agent is applied on the second contact surface, a semi-solid or liquid anti-rust coating can easily be formed. The method for applying the semi-solid or liquid anti-rust lubricant agent is not particularly limited as long as an anti-rust coating can be formed on the second contact surface. For example, the anti-rust lubricant agent may be applied by spray coating. The anti-rust lubricant agent may also be applied by brushing. Another well-known method may also be employed to apply the anti-rust lubricant agent on the second contact surface to form the anti-rust coating.

### [Optional process]

### [Chemical treatment coating formation process]

In the case of forming the chemical treatment coating 90 on the second contact surface, a chemical treatment coating formation process may be performed at a timing that is after the second contact surface roughness adjustment process and before the anti-rust coating formation process. In other words, the chemical treatment coating formation process is an optional process, and need not be performed.

In the case of performing the chemical treatment coating formation process, a well-known chemical treatment is performed in the chemical treatment coating formation process to thereby form the chemical treatment coating 90 on the second contact surface after the roughness of the second contact surface has been adjusted. The chemical treatment can be carried out by a well-known method. A common chemical treatment solution can be used as the treatment solution. For example, in a case where the chemical treatment coating 90 is a phosphate chemical treatment coating, one example of the solution that can be mentioned is a zinc phosphate chemical treatment solution containing 1 to 150 g/L of phosphate ions, 3 to 70 g/L of zinc ions, 1 to 100 g/L of nitrate ions, and 0 to 30 g/L of nickel ions. A manganese phosphate chemical treatment solution can also be used for the chemical treatment. The temperature of the solution is in the range of normal temperature to 100°C, for example. The treatment time can be appropriately set depending on the desired coating thickness, and, for example, is in the range of 5 to 20 minutes. To facilitate the formation of the chemical treatment coating, surface modification may be performed prior to the chemical treatment. The term "surface modification" refers to a treatment that includes immersion in an aqueous solution for surface modification that contains colloidal titanium. After the chemical treatment, it is preferable that rinsing with water or with warm water is carried out before drying.

The oil-well metal pipe of the present embodiment can be produced by the above production process.

### EXAMPLES

Examples are described hereunder. However, the oil-well metal pipe of the present embodiment is not limited by the Examples. The symbol "%" used in the Examples means "mass%", unless specifically stated otherwise.

### [Example 1]

Oil-well metal pipes that had various structures were prepared. The test described hereunder was conducted using the thus-prepared oil-well metal pipes, and the yield torque (ft-lb) was measured. First, the oil-well metal pipes shown in Table 1 were prepared.

### [Table 1]

**TABLE 1**

| Test No. | Outer diameter (inches) | Wall Thickness (mm) | Steel Type | Second Contact Surface | | | | First Contact Surface | | Yield Torque Ratio |
|---|---|---|---|---|---|---|---|---|---|---|
| | | | | | | | | Plating Layer | Solid Lubricant Layer | |
| | | | | Blasting Treatment | Ra (µm) | Zinc Phosphate | Anti-rust Coating | Type | | |
| 11 | 7" | 10.36 | L80 | - | <0.5 | Yes | Liquid anti-rust coating | Zn-Ni | Yes | 100% |
| 12 | 7" | 10.36 | L80 | - | <0.5 | - | Semi-solid anti-rust coating | Zn-Ni | Yes | 102% |
| 13 | 7" | 10.36 | L80 | Yes | 2.5 | Yes | Liquid anti-rust coating | Zn-Ni | Yes | 122% |
| 14 | 7" | 10.36 | L80 | Yes | 2.4 | - | Semi-solid anti-rust coating | Zn-Ni | Yes | 122% |
| 15 | 7" | 10.36 | L80 | Yes | 2.5 | Yes | Yellow dope | Zn-Ni | Yes | 134% |
| 16 | 7" | 10.36 | L80 | Yes | 2.7 | - | Yellow dope | Zn-Ni | Yes | 168% |

The outer diameter of the oil-well metal pipes of Test Numbers 11 to 16 was 7 inches (177.80 mm), and the wall thickness was 10.36 mm. The chemical composition of each oil-well metal pipe corresponded to L80 defined in API-5CT.

In Test Numbers 11 to 16, the first contact surface was taken to be the box contact surface and the second contact surface was taken to be the pin contact surface. A Zn-Ni alloy plating layer was formed on the first contact surface of each test number. Specifically, the first contact surface was immersed in a plating solution and subjected to electroplating, and a Zn-Ni alloy plating layer was formed on the first contact surface. DAIN Zinalloy N2-PL (trade name) manufactured by Daiwa Fine Chemicals Co., Ltd was used as the Zn-Ni alloy plating solution. In each of the test numbers, the chemical composition of the Zn-Ni alloy plating layer that was formed by the above process was a chemical composition that contained Ni in an amount within the range of 10 to 16% in mass%, with the balance being Zn. Note that, the thickness of the Zn-Ni alloy plating layer of each test number was within the range of 5 to 15 µm.

In addition, a solid lubricant layer was formed on the Zn-Ni alloy plating layer. Specifically, an organic liquid composition was applied on the Zn-Ni alloy plating layer. The organic liquid composition contained epoxy resin, pure water, ethylene glycol mono-n-butyl ether, isopropyl alcohol, 1-butanol and PTFE particles. After applying the organic liquid composition on the Zn-Ni alloy plating layer by spray coating, a well-known curing treatment was performed to thereby form a solid lubricant layer. Specifically, as a curing treatment, preliminary drying (at 85°C for 10 mins) and baking (at 210°C for 20 mins) were performed. The average coating thickness of the obtained solid lubricant layer was within the range of 20 to 30 µm in each test number.

The second contact surface of Test Numbers 13 to 16 was subjected to a sand blasting treatment. The arithmetic average roughness Ra of the second contact surface after a sand blasting treatment was measured in conformity with the method for measuring arithmetic average roughness that is defined in JIS B 0601 (2013). Specifically, an arbitrary 10 locations on the second contact surface were adopted as measurement locations. At each measurement location, the arithmetic average roughness Ra was measured over an evaluation length extending in the pipe axis direction. The evaluation length was set to a multiple of five times the sampling length (cut-off wavelength). Measurement of the arithmetic average roughness Ra was performed using a stylus type roughness meter, and the measurement speed was set to 0.5 mm/sec. Among the 10 values for the arithmetic average roughness Ra that were determined, the arithmetic mean value of the values for arithmetic average roughness Ra at six locations that excluded the largest arithmetic average roughness Ra, the second largest arithmetic average roughness Ra, the smallest arithmetic average roughness Ra and the second smallest arithmetic average roughness Ra was defined as the arithmetic average roughness Ra. A surface roughness tester with the trade name SURFTEST SJ-301 manufactured by Mitutoyo Corporation was used as a contact-type roughness meter. The obtained arithmetic average roughness Ra (µm) is shown in Table 1. Note that, the second contact surface of Test Numbers 11 and 12 was not subjected to a sand blasting treatment (indicated by the symbol "-" in the "Blasting Treatment" column in Table 1). The arithmetic average roughness Ra of the second contact surface of the oil-well metal pipe of Test Numbers 11 and 12 in which a sand blasting treatment was not performed was approximately 0.2 µm, respectively, and thus was less than 0.5 µm. The arithmetic average roughness Ra of the second contact surface of the oil-well metal pipe of Test Numbers 13 to 16 was 2.7, and thus each of these values was within the range of 0.5 to 10.0 µm.

In addition, with respect to Test Numbers 11, 13 and 15, the second contact surface (pin contact surface) was immersed in a zinc phosphate chemical treatment solution (PALBOND 181X (trade name) manufactured by Nihon Parkerizing Co., Ltd.) at 75 to 85°C for 10 mins, thereby forming a zinc phosphate chemical treatment layer. The thickness of the zinc phosphate chemical treatment layer was 12 µm. Note that, a zinc phosphate chemical treatment layer was not formed on the second contact surface of Test Numbers 12, 14 and 16 (indicated by the symbol "-" in the "Zinc Phosphate" column in Table 1.

In Test Numbers 11 and 13, an anti-rust coating was formed on the zinc phosphate chemical treatment layer. Specifically, a liquid anti-rust coating was formed on the zinc phosphate chemical treatment layer of Test Numbers 11 and 13. Further, a semi-solid (grease state) anti-rust coating was formed on the second contact surface of Test Numbers 12 and 14. A semi-solid anti-rust coating composed of yellow dope was formed on the second contact surface of Test Numbers 15 and 16. In each of the test numbers, a liquid anti-rust lubricant agent or a semi-solid anti-rust lubricant agent was spray coated onto the surface of the zinc phosphate chemical treatment layer or the second contact surface from a position at a distance of 300 mm therefrom to thereby form a liquid anti-rust coating or a semi-solid anti-rust coating. Alternatively, a liquid anti-rust lubricant agent or a semi-solid anti-rust lubricant agent was applied on the surface of the zinc phosphate chemical treatment layer or the second contact surface by brush application to thereby form a liquid anti-rust coating or a semi-solid anti-rust coating. During the spray coating, the oil-well metal pipe was rotated about its central axis, and a liquid anti-rust coating or a semi-solid anti-rust coating was formed over the entire surface of the zinc phosphate chemical treatment layer or over the entire second contact surface.

Note that, the liquid anti-rust lubricant agent contained a mineral spirit in an amount of 50 to 75 mass% and a petroleum-based oil in an amount of 25 mass% or less. The semi-solid anti-rust lubricant agent contained, in mass%, refined mineral oil: 20 to 30%, petroleum-based wax: 8 to 13, graphite: 3 to 5%, and rosin: 5 to 10%, with the balance being Ca sulfonate. As described above, in Test Numbers 15 and 16, yellow dope (BoL4010NM (trade name) manufactured by Bestolife Corporation) was used as a semi-solid anti-rust lubricant agent.

The oil-well metal pipes of Test Numbers 11 to 16 were produced by the above-described production process.

### [Yield torque measurement test]

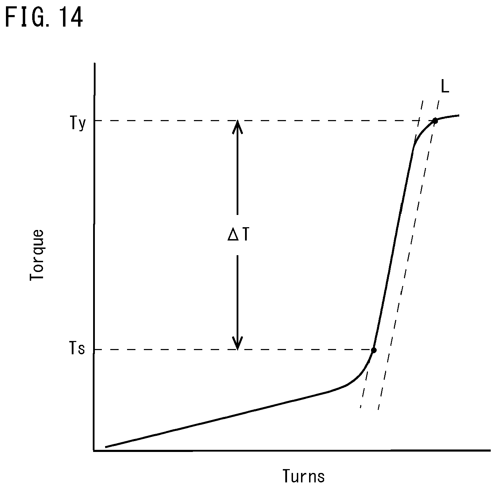

The yield torque was measured by the following method using a pair (two) of the oil-well metal pipes (oil-well metal pipes which had a wedge thread and did not have a shoulder surface) of each test number. Specifically, the fastening torque value was gradually increased at a fastening speed of 0.5 rpm, and the test was ended at a point when the material yielded. The torque at the time of fastening was measured, and a torque chart illustrated in FIG. 14 was prepared. Reference characters "Ts" in FIG. 14 denote the shouldering torque. A line segment L is a straight line that has the same slope as the slope of a linear region of the torque chart after shouldering, and for which the number of turns is 0.2% more in comparison to the linear region. In the present example, a torque value at which the line segment L and the torque chart intersect was defined as "yield torque Ty". A ratio (%) of the yield torque Ty of each test number with respect to the yield torque Ty of Test Number 11 in which the second contact surface was not subjected to a sand blasting treatment was defined as "yield torque ratio". The yield torque ratio is shown in Table 1.

### [Evaluation results]

Referring to Table 1, in Test Numbers 13 to 16, a Zn-Ni alloy plating layer and a solid lubricant layer were laminated on the first contact surface, the second contact surface was subjected to a sand blasting treatment and the surface roughness was within the range of 0.5 to 10.0 µm, and a semi-solid or liquid anti-rust coating was formed on the second contact surface. Therefore, the yield torque ratio was high in comparison to Test Numbers 11 and 12 in which the second contact surface was not subjected to a sand blasting treatment. In other words, excellent high torque performance was obtained.

### [Example 2]

The oil-well metal pipes shown in Table 2 were prepared.

### [Table 2]

**TABLE 2**

| Test No. | Outer diameter (inches) | Wall Thickness (mm) | Steel Type | Second Contact Surface | | | | First Contact Surface | | Yield Torque Ratio |
|---|---|---|---|---|---|---|---|---|---|---|
| | | | | | | | | Plating Laver | Solid Lubricant Layer | |
| | | | | Blasting Treatment | Ra (µm) | Zinc Phosphate | Anti-rust Coating | Type | | |
| 21 | 7" | 10.36 | L80-13CR | - | <0.5 | - | Liquid anti-rust coating | Zn-Ni | Yes | 100% |
| 22 | 7" | 10.36 | L80-13CR | - | <0.5 | - | Semi-solid anti-rust coating | Zn-Ni | Yes | 94% |
| 23 | 7" | 10.36 | L80-13CR | Yes | 2.4 | - | Liquid anti-rust coating | Zn-Ni | Yes | 146% |
| 24 | 7" | 10.36 | L80-13CR | Yes | 2.7 | - | Semi-solid anti-rust coating | Zn-Ni | Yes | 131% |

The outer diameter of the oil-well metal pipes of Test Numbers 21 to 24 was 7 inches (177.80 mm), and the wall thickness was 10.36 mm. The chemical composition of each oil-well metal pipe corresponded to L80-13CR defined in API-5CT.

In Test Numbers 21 to 24, the first contact surface was taken to be the box contact surface and the second contact surface was taken to be the pin contact surface. A Zn-Ni alloy plating layer was formed on the first contact surface of each test number by the same method as in Example 1. In each of the test numbers, the chemical composition of the Zn-Ni alloy plating layer contained Ni in an amount within the range of 10 to 16% in mass%, with the balance being Zn. The thickness of the Zn-Ni alloy plating layer of each test number was within the range of 5 to 15 µm.

In addition, a solid lubricant layer of the same type as in Example 1 was formed on the Zn-Ni alloy plating layer. In each test number the average coating thickness of the obtained solid lubricant layer was within the range of 20 to 30 µm.

On the other hand, the second contact surface of Test Numbers 23 and 24 was subjected to a sand blasting treatment by the same method as in Example 1. The arithmetic average roughness Ra of the second contact surface after a sand blasting treatment was measured by the same method as in Example 1. The obtained arithmetic average roughness Ra (µm) is shown in Table 2. Note that, the second contact surface of Test Numbers 21 and 22 was not subjected to a sand blasting treatment (indicated by the symbol "-" in the "Blasting Treatment" column in Table 2). The arithmetic average roughness Ra of the second contact surface of the oil-well metal pipe of Test Numbers 21 and 22 in which a sand blasting treatment was not performed was approximately 0.2 µm, respectively, and thus was less than 0.5 µm.

An anti-rust coating was formed on the second contact surface of each test number. Specifically, a liquid anti-rust coating was formed on the second contact surface of Test Numbers 21 and 23. Further, a semi-solid anti-rust coating was formed on the second contact surface of Test Numbers 22 and 24. The formation methods were the same as in Example 1. The oil-well metal pipes of Test Numbers 21 to 24 were produced by the above described production process.

### [Yield torque measurement test]

The yield torque ratio of the oil-well metal pipe of each test number was determined by the same method as in Example 1.

### [Evaluation results]

Referring to Table 2, in Test Numbers 23 and 24, a Zn-Ni alloy plating layer and a solid lubricant layer were laminated on the first contact surface, the second contact surface was subjected to a sand blasting treatment and the surface roughness was within the range of 0.5 to 10.0 µm, and a liquid or semi-solid anti-rust coating was formed on the second contact surface. Therefore, the yield torque ratio was high in comparison to Test Numbers 21 and 22 in which the second contact surface was not subjected to a sand blasting treatment. In other words, excellent high torque performance was obtained.

### [Example 3]

The oil-well metal pipes shown in Table 3 were prepared.

### [Table 3]

**TABLE 3**

| Test No. | Outer diameter (inches) | Wall Thickness (mm) | Steel Type | Second Contact Surface | | | | First Contact Surface | | Yield Torque Ratio |
|---|---|---|---|---|---|---|---|---|---|---|
| | | | | | | | | Plating Layer | Solid Lubricant Layer | |
| | | | | Blasting Treatment | Ra (µm) | Zinc Phosphate | Anti-rust Coating | Type | | |
| 31 | 9-5/8" | 13.84 | P110 | - | <0.5 | - | Liquid anti-rust coating | Zn-Ni | Yes | 100% |
| 32 | 9-5/8" | 13.84 | P110 | Yes | 2.4 | - | Liquid anti-rust coating | Zn-Ni | Yes | 121% |

The outer diameter of the oil-well metal pipes of Test Numbers 31 and 32 was 9-5/8 inches (244.475 mm), and the wall thickness was 13.84 mm. The chemical composition of each of the oil-well metal pipes corresponded to P110 defined in API-5CT.

In Test Numbers 31 and 32, the first contact surface was taken to be the box contact surface and the second contact surface was taken to be the pin contact surface. A Zn-Ni alloy plating layer was formed on the first contact surface of each test number by the same method as in Example 1. In each of the test numbers, the chemical composition of the Zn-Ni alloy plating layer contained Ni in an amount within the range of 10 to 16% in mass%, with the balance being Zn. The thickness of the Zn-Ni alloy plating layer of each test number was within the range of 5 to 15 µm.

In addition, a solid lubricant layer of the same type as in Example 1 was formed on the Zn-Ni alloy plating layer. In each test number the average coating thickness of the obtained solid lubricant layer was within the range of 20 to 30 µm.

On the other hand, the second contact surface of Test Number 32 was subjected to a sand blasting treatment by the same method as in Example 1. The arithmetic average roughness Ra of the second contact surface after a sand blasting treatment was measured by the same method as in Example 1. The obtained arithmetic average roughness Ra (µm) is shown in Table 3. Note that, the second contact surface of Test Number 31 was not subjected to a sand blasting treatment (indicated by the symbol "-" in the "Blasting Treatment" column in Table 3). The arithmetic average roughness Ra of the second contact surface of the oil-well metal pipe of Test Number 31 in which a sand blasting treatment was not performed was approximately 0.2 µm, and thus was less than 0.5 µm.

An anti-rust coating was formed on the second contact surface of each test number. Specifically, a semi-solid anti-rust coating was formed on the second contact surface of Test Numbers 31 and 32. The formation method was the same as in Example 1. The oil-well metal pipes of Test Numbers 31 and 32 were produced by the above described production process.

### [Yield torque measurement test and evaluation results]

The yield torque ratio of the oil-well metal pipe of each test number was determined by the same method as in Example 1. Referring to Table 3, in Test Number 32, a Zn-Ni alloy plating layer and a solid lubricant layer were laminated on the first contact surface, the second contact surface was subjected to a sand blasting treatment and the surface roughness was within the range of 0.5 to 10.0 µm, and a liquid anti-rust coating was formed on the second contact surface. Therefore, the yield torque ratio was high in comparison to Test Number 31 in which the second contact surface was not subjected to a sand blasting treatment. In other words, excellent high torque performance was obtained.

### [Example 4]

The oil-well metal pipes shown in Table 4 were prepared.

### [Table 4]

**TABLE 4**

| Test No. | Outer diameter (inches) | Wall Thickness (mm) | Steel Type | Second Contact Surface | | | | First Contact Surface | | Yield Torque Ratio |
|---|---|---|---|---|---|---|---|---|---|---|
| | | | | | | | | Plating Layer | Solid Lubricant Layer | |
| | | | | Blasting Treatment | Ra (µm) | Zinc Phosphate | Anti-rust Coating | Type | | |
| 41 | 7" | 11.51 | SM13CRS-110 | - | <0.5 | - | Semi-solid anti-rust coating | Zn-Ni | Yes | 100% |
| 42 | 7" | 11.51 | SM13CRS-110 | - | <0.5 | - | Liquid anti-rust coating | Zn-Ni | Yes | 99% |
| 43 | 7" | 11.51 | SM13CRS-110 | Yes | 2.5 | - | Semi-solid anti-rust coating | Zn-Ni | Yes | 118% |

The outer diameter of the oil-well metal pipes of Test Numbers 41 to 43 was 7 inches (177.80 mm), and the wall thickness was 11.51 mm. A material with the trade name "SM13CRS-110" produced by Nippon Steel Corporation was used for the oil-well metal pipe.

In Test Numbers 41 to 43, the first contact surface was taken to be the box contact surface and the second contact surface was taken to be the pin contact surface. A Zn-Ni alloy plating layer was formed on the first contact surface of each test number by the same method as in Example 1. In each of the test numbers, the chemical composition of the Zn-Ni alloy plating layer contained Ni in an amount within the range of 10 to 16% in mass%, with the balance being Zn. The thickness of the Zn-Ni alloy plating layer of each test number was within the range of 5 to 15 µm.

In addition, a solid lubricant layer of the same type as in Example 1 was formed on the Zn-Ni alloy plating layer. In each test number the average coating thickness of the obtained solid lubricant layer was within the range of 20 to 30 µm.

On the other hand, the second contact surface of Test Number 43 was subjected to a sand blasting treatment by the same method as in Example 1. The arithmetic average roughness Ra of the second contact surface after a sand blasting treatment was measured by the same method as in Example 1. The obtained arithmetic average roughness Ra (µm) is shown in Table 4. Note that, the second contact surface of Test Numbers 41 and 42 were not subjected to a sand blasting treatment (indicated by the symbol "-" in the "Blasting Treatment" column in Table 4). The arithmetic average roughness Ra of the second contact surface of the oil-well metal pipe of Test Numbers 41 and 42 in which a sand blasting treatment was not performed was approximately 0.2 µm, respectively, and thus was less than 0.5 µm.

An anti-rust coating was formed on the second contact surface in each test number. Specifically, a semi-solid anti-rust coating was formed on the second contact surface of Test Numbers 41 and 43. Further, a liquid anti-rust coating was formed on the second contact surface of Test Number 42. The formation methods were the same as in Example 1. The oil-well metal pipes of Test Numbers 41 to 43 were produced by the above described production process.

### [Yield torque measurement test and evaluation results]

The yield torque ratio of the oil-well metal pipe of each test number was determined by the same method as in Example 1. Referring to Table 4, in Test Number 43, a Zn-Ni alloy plating layer and a solid lubricant layer were laminated on the first contact surface, the second contact surface was subjected to a sand blasting treatment and the surface roughness was within the range of 0.5 to 10.0 µm, and a semi-solid anti-rust coating was formed on the second contact surface. Therefore, the yield torque ratio was high in comparison to Test Numbers 41 and 42 in which the second contact surface was not subjected to a sand blasting treatment. In other words, excellent high torque performance was obtained.

### [Example 5]

The oil-well metal pipes shown in Table 5 were prepared.

### [Table 5]

**TABLE 5**

| Test No. | Outer diameter (inches) | Wall Thickness (mm) | Steel Type | Second Contact Surface | | | | First Contact Surface | | Yield Torque Ratio |
|---|---|---|---|---|---|---|---|---|---|---|
| | | | | | | | | Plating Laver | Solid Lubricant Layer | |
| | | | | Blasting Treatment | Ra (µm) | Zinc Phosphate | Anti-rust Coating | Type | | |
| 51 | 4-1/2" | 6.88 | L80-13CR | - | <0.5 | - | Liquid anti-rust coating | Zn-Ni | Yes | 100% |
| 52 | 4-1/2" | 6.88 | L80-13CR | - | <0.5 | - | Semi-solid anti-rust coating | Zn-Ni | Yes | 95% |
| 53 | 4-1/2" | 6.88 | L80-13CR | Yes | 2.7 | - | Liquid anti-rust coating | Zn-Ni | Yes | 149% |
| 54 | 4-1/2" | 6.88 | L80-13CR | Yes | 2.5 | - | Semi-solid anti-rust coating | Zn-Ni | Yes | 136% |

The outer diameter of the oil-well metal pipes of Test Numbers 51 to 54 was 4.5 inches (114.3 mm), and the wall thickness was 6.88 mm. The chemical composition of each of the oil-well metal pipes corresponded to L80-13CR defined in API-5CT.

**In** Test Numbers 51 to 54, the first contact surface was taken to be the box contact surface and the second contact surface was taken to be the pin contact surface. A Zn-Ni alloy plating layer was formed on the first contact surface of each test number by the same method as in Example 1. **In** each of the test numbers, the chemical composition of the Zn-Ni alloy plating layer contained Ni in an amount within the range of 10 to 16% in mass%, with the balance being Zn. The thickness of the Zn-Ni alloy plating layer of each test number was within the range of 5 to 15 µm.

In addition, a solid lubricant layer of the same type as in Example 1 was formed on the Zn-Ni alloy plating layer. In each test number the average coating thickness of the obtained solid lubricant layer was within the range of 20 to 30 µm.

On the other hand, the second contact surface of Test Numbers 53 and 54 was subjected to a sand blasting treatment by the same method as in Example 1. The arithmetic average roughness Ra of the second contact surface after a sand blasting treatment was measured by the same method as in Example 1. The obtained arithmetic average roughness Ra (µm) is shown in Table 5. Note that, the second contact surface of Test Numbers 51 and 52 was not subjected to a sand blasting treatment (indicated by the symbol "-" in the "Blasting Treatment" column in Table 5). The arithmetic average roughness Ra of the second contact surface of the oil-well metal pipe of Test Numbers 51 and 52 in which a sand blasting treatment was not performed was approximately 0.2 µm, respectively, and thus was less than 0.5 µm.

An anti-rust coating was formed on the second contact surface of each test number. Specifically, a liquid anti-rust coating was formed on the second contact surface of Test Numbers 51 and 53. Further, a semi-solid anti-rust coating was formed on the second contact surface of Test Numbers 52 and 54. The formation methods were the same as in Example 1. The oil-well metal pipes of Test Numbers 51 to 54 were produced by the above described production process.

### [Yield torque measurement test and evaluation results]

The yield torque ratio of the oil-well metal pipe of each test number was determined by the same method as in Example 1. Referring to Table 5, in Test Numbers 53 and 54, a Zn-Ni alloy plating layer and a solid lubricant layer were laminated on the first contact surface, the second contact surface was subjected to a sand blasting treatment and the surface roughness was within the range of 0.5 to 10.0 µm, and a semi-solid or liquid anti-rust coating was formed on the second contact surface. Therefore, the yield torque ratio was high in comparison to Test Numbers 51 and 52 in which the second contact surface was not subjected to a sand blasting treatment. In other words, excellent high torque performance was obtained.

### [Example 6]

The oil-well metal pipes shown in Table 6 were prepared.

### [Table 6]

**TABLE 6**

| Test No. | Outer diameter (inches) | Wall Thickness (mm) | Steel Type | Second Contact Surface | | | | First Contact Surface | | Yield Torque Ratio |
|---|---|---|---|---|---|---|---|---|---|---|
| | | | | | | | | Plating Laver | Solid Lubricant Layer | |
| | | | | Blasting Treatment | Ra (µm) | Zinc Phosphate | Anti-rust Coating | Type | | |
| 61 | 4-1/2" | 6.88 | SM13CRS-110 | - | <0.5 | - | Liquid anti-rust coating | Zn-Ni | Yes | 100% |
| 62 | 4-1/2" | 6.88 | SM13CRS-110 | - | <0.5 | - | Semi-solid anti-rust coating | Zn-Ni | Yes | 108% |
| 63 | 4-1/2" | 6.88 | SM13CRS-110 | Yes | 2.4 | - | Liquid anti-rust coating | Zn-Ni | Yes | 154% |
| 64 | 4-1/2" | 6.88 | SM13CRS-110 | Yes | 2.6 | - | Semi-solid anti-rust coating | Zn-Ni | Yes | 138% |

The outer diameter of the oil-well metal pipes of Test Numbers 61 to 64 was 4.5 inches (114.3 mm), and the wall thickness was 6.88 mm. A material with the trade name "SM13CRS-110" produced by Nippon Steel Corporation was used for the oil-well metal pipe.

In Test Numbers 61 to 64, the first contact surface was taken to be the box contact surface and the second contact surface was taken to be the pin contact surface. A Zn-Ni alloy plating layer was formed on the first contact surface of each test number by the same method as in Example 1. In each of the test numbers, the chemical composition of the Zn-Ni alloy plating layer contained Ni in an amount within the range of 10 to 16% in mass%, with the balance being Zn. The thickness of the Zn-Ni alloy plating layer of each test number was within the range of 5 to 15 µm.

In addition, a solid lubricant layer of the same type as in Example 1 was formed on the Zn-Ni alloy plating layer. In each test number the average coating thickness of the obtained solid lubricant layer was within the range of 20 to 30 µm.

On the other hand, the second contact surface of Test Numbers 63 and 64 was subjected to a sand blasting treatment by the same method as in Example 1. The arithmetic average roughness Ra of the second contact surface after a sand blasting treatment was measured by the same method as in Example 1. The obtained arithmetic average roughness Ra (µm) is shown in Table 6. Note that, the second contact surface of Test Numbers 61 and 62 was not subjected to a sand blasting treatment (indicated by the symbol "-" in the "Blasting Treatment" column in Table 6). The arithmetic average roughness Ra of the second contact surface of the oil-well metal pipe of Test Numbers 61 and 62 in which a sand blasting treatment was not performed was approximately 0.2 µm, respectively, and thus was less than 0.5 µm.

An anti-rust coating was formed on the second contact surface of each test number. Specifically, a liquid anti-rust coating was formed on the second contact surface of Test Numbers 61 and 63. Further, a semi-solid anti-rust coating was formed on the second contact surface of Test Numbers 62 and 64. The formation methods were the same as in Example 1. The oil-well metal pipes of Test Numbers 61 to 64 were produced by the above described production process.

### [Yield torque measurement test and evaluation results]

The yield torque ratio of the oil-well metal pipe of each test number was determined by the same method as in Example 1. Referring to Table 6, in Test Numbers 63 and 64, a Zn-Ni alloy plating layer and a solid lubricant layer were laminated on the first contact surface, the second contact surface was subjected to a sand blasting treatment and the surface roughness was within the range of 0.5 to 10.0 µm, and a semi-solid or liquid anti-rust coating was formed on the second contact surface. Therefore, the yield torque ratio was high in comparison to Test Numbers 61 and 62 in which the second contact surface was not subjected to a sand blasting treatment. In other words, excellent high torque performance was obtained.

### [Example 7]

Oil-well metal pipes that had various structures were prepared. A repeated fastening test that is described hereunder was conducted using the prepared oil-well metal pipes, and the galling resistance was evaluated. First, the oil-well metal pipes shown in Table 7 were prepared.

### [Table 7]

**TABLE 7**

| Test No. | Outer diameter (inches) | Wall Thickness (mm) | Steel Type | Second Contact Surface | | | First Contact Surface | | Fastening Times |
|---|---|---|---|---|---|---|---|---|---|
| | | | | Blasting Treatment | Zinc Phosphate | Anti-rust Coating | Plating Layer | Solid Lubricant | |
| 71 | 7" | 11.51 | SM13CRS-110 | - | - | Liquid anti-rust coating | Zn-Ni | Yes | 10 |
| 72 | 7" | 11.51 | SM13CRS-110 | - | - | Semi-solid anti-rust coating | Zn-Ni | Yes | 10 |
| 73 | 7" | 11.51 | SM13CRS-110 | Yes | - | Liquid anti-rust coating | Zn-Ni | Yes | 7 |
| 74 | 7" | 11.51 | SM13CRS-110 | Yes | - | Semi-solid anti-rust coating | Zn-Ni | Yes | 6 |
| 75 | 7" | 11.51 | SM13CRS-110 | Yes | - | Liquid anti-rust coating | Zn-Ni | Yes | 10 |
| 76 | 7" | 11.51 | SM13CRS-110 | Yes | - | Semi-solid anti-rust coating | Zn-Ni | Yes | 10 |
| 77 | 7" | 11.51 | SM13CRS-110 | Yes | - | Liquid anti-rust coating | Zn-Ni | Yes | 10 |
| 78 | 7" | 11.51 | SM13CRS-110 | Yes | - | Semi-solid anti-rust coating | Zn-Ni | Yes | 10 |
| 79 | 7" | 12.65 | SM13CRS-110 | - | - | Liquid anti-rust coating | Zn-Ni | Yes | 10 |
| 80 | 7" | 12.65 | SM13CRS-110 | - | - | Semi-solid anti-rust coating | Zn-Ni | Yes | 10 |
| 81 | 7" | 12.65 | SM13CRS-110 | Yes | - | Liquid anti-rust coating | Zn-Ni | Yes | 10 |
| 82 | 7" | 12.65 | SM13CRS-110 | Yes | - | Semi-solid anti-rust coating | Zn-Ni | Yes | 10 |
| 83 | 7" | 11.51 | SM13CRS-110 | Yes | - | Yellow dope | Zn-Ni | Yes | 10 |

The outer diameter of the oil-well metal pipes of Test Numbers 71 to 83 was 7 inches (177.80 mm), and the wall thickness was 11.51 mm or 12.65 mm. With respect to the oil-well metal pipes of Test Numbers 71 to 83, a material with the trade name "SM13CRS-110" produced by Nippon Steel Corporation was used for these test numbers.

In Test Numbers 71 to 83, the first contact surface was taken to be the box contact surface and the second contact surface was taken to be the pin contact surface. A Zn-Ni alloy plating layer was formed on the first contact surface of each test number by the same method as in Example 1. In each of the test numbers, the chemical composition of the Zn-Ni alloy plating layer contained Ni in an amount within the range of 10 to 16% in mass%, with the balance being Zn. The thickness of the Zn-Ni alloy plating layer of each test number was within the range of 5 to 15 µm.

In addition, a solid lubricant layer of the same type as in Example 1 was formed on the Zn-Ni alloy plating layer. In each test number the average coating thickness of the obtained solid lubricant layer was within the range of 20 to 30 µm.

On the other hand, the second contact surface of Test Numbers 73 to 78, 81 and 82 was subjected to a sand blasting treatment by the same method as in Example 1. The arithmetic average roughness Ra of the second contact surface after sand a blasting treatment was measured by the same method as in Example 1. The obtained arithmetic average roughness Ra (µm) in each test number was approximately 2.5 µm, and was thus within the range of 0.5 to 10.0 µm. Note that, the second contact surface of Test Numbers 71, 72, 79 and 80 was not subjected to a sand blasting treatment (indicated by the symbol "-" in the "Blasting Treatment" column in Table 7). The arithmetic average roughness Ra of the second contact surface in the test numbers in which a sand blasting treatment was not performed was approximately 0.2 µm, and was thus less than 0.5 µm.

An anti-rust coating was formed on the second contact surface of each test number. Specifically, a liquid anti-rust coating was formed on the second contact surface of Test Numbers 71, 73, 75, 77, 79 and 81. Further, a semi-solid anti-rust coating was formed on the second contact surface of Test Numbers 72, 74, 76, 78, 80 and 82. The formation methods were the same as in Example 1. Note that, in Test Number 83, yellow dope was applied and a semi-solid anti-rust coating was formed. The oil-well metal pipes of Test Numbers 71 to 83 were produced by the above production process.

### [Galling resistance evaluation test]

Evaluation of the galling resistance was performed by means of a repeated fastening test. In Test Numbers 71 to 83 in Table 7, fastening and loosening were repeated at room temperature (20°C) using a pair (two) of the oil-well metal pipes of each test number, and the galling resistance was evaluated. The fastening torque was set to 24350 N·m. Each time one cycle of fastening and loosening was completed, the pin contact surface and the box contact surface were visually observed. The state of occurrence of galling on thread parts, the pin sealing surface and the box sealing surface was examined by visual inspection. With respect to the pin sealing surface and the box sealing surface, the test was ended when galling was confirmed. When the galling on a thread part was minor and was repairable by repairing by filing or the like, the galling flaws were corrected and the test was continued. The maximum number of times for repeating fastening was set as 10 times. The largest number of times fastening (maximum of 10 times) was performed without either unrepairable galling occurring at a thread part or galling occurring at a pin sealing surface and a box sealing surface was adopted as the evaluation index for galling resistance. The results are shown in the "Fastening Times" column in Table 7. In the API standard, it is defined that the number of fastening times for a 7-inch casing pipe is to be 3 times or more. Therefore, it is determined that excellent galling resistance is exhibited in a case where the number of fastening times is 3 times or more.

### [Evaluation results]

Referring to Table 7, in each of Test Numbers 71 to 83, the number of fastening times was 3 times or more, and thus the oil-well metal pipes of these test numbers were excellent in galling resistance.

An embodiment of the present invention has been described above. However, the foregoing embodiment is merely an example for implementing the present invention. Accordingly, the present invention is not limited to the above embodiment, and the above embodiment can be appropriately modified and implemented within a range which does not depart from the scope of the present invention defined in the appended claims.

### REFERENCE SIGNS LIST

- 1: Oil-well metal pipe
- 10: Pipe main body
- 10A: First end portion
- 10B: Second end portion
- 11: Pin tube body
- 12: Coupling
- 40: Pin
- 50: Box
- 60: Plating layer
- 70: Solid lubricant layer
- 80: Anti-rust coating
- 90: Chemical treatment coating
- 400: Pin contact surface
- 500: Box contact surface

## Claims

1. An oil-well metal pipe (1), comprising:
a pipe main body (10) including a first end portion (10A) and a second end portion (10B),
wherein:
the pipe main body (10) includes:
a pin (40) formed at the first end portion (10A), and
a box (50) formed at the second end portion (10B);
the pin (40) includes:
a pin contact surface (400) which at least has an external thread part formed on an outer peripheral surface of the first end portion (10A) of the pipe main body (10);
the box (50) includes:
a box contact surface (500) which at least has an internal thread part formed on an inner peripheral surface of the second end portion (10B) of the pipe main body (10);
a plating layer (60) is formed on a first contact surface, the first contact surface being one of the pin contact surface (400) and the box contact surface (500);
a solid lubricant layer (70) is formed on the plating layer (60);
**characterized in that**:
an arithmetic average roughness Ra of a second contact surface is within a range of 0.5 to 10.0 µm, the second contact surface being the other of the pin contact surface (400) and the box contact surface (500); and
a semi-solid or liquid anti-rust coating (80) is formed on the second contact surface.

2. The oil-well metal pipe (1) according to claim 1, wherein:
a chemical treatment coating (90) is further formed on the second contact surface, and
the anti-rust coating (80) is formed on the chemical treatment coating (90).

3. The oil-well metal pipe (1) according to claim 1 or claim 2, wherein:
the second contact surface is subjected to a blasting treatment.

4. The oil-well metal pipe (1) according to any one of claim 1 to claim 3, wherein:
the plating layer (60) is composed of a Zn-Ni alloy.

## Patentansprüche

1. Metallrohr für Ölbohrungen (1), umfassend:
einen Rohrhauptkörper (10) einschließlich eines ersten Endabschnitts (10A) und eines zweiten Endabschnitts (10B),
wobei:
der Rohrhauptkörper (10) Folgendes beinhaltet:
einen Bolzen (40), der an dem ersten Endabschnitt (10A) gebildet ist, und
ein Gehäuse (50), das an dem zweiten Endabschnitt (10B) gebildet ist;
wobei der Bolzen (40) Folgendes beinhaltet:
eine Bolzenkontaktfläche (400), die mindestens einen externen Gewindeteil aufweist, der an einer Außenumfangsfläche des ersten Endabschnitts (10A) des Rohrhauptkörpers (10) gebildet ist;
wobei das Gehäuse (50) Folgendes beinhaltet:
eine Gehäusekontaktfläche (500), die mindestens einen internen Gewindeteil aufweist, der an einer Innenumfangsfläche des zweiten Endabschnitts (10B) des Rohrhauptkörpers (10) gebildet ist;
eine Plattierungsschicht (60) ist an einer ersten Kontaktfläche gebildet, wobei die erste Kontaktfläche eine aus der Bolzenkontaktfläche (400) und der Gehäusekontaktfläche (500) ist;
eine Festschmierstoffschicht (70) ist an der Plattierungsschicht (60) gebildet;
**dadurch gekennzeichnet, dass**:
eine arithmetische mittlere Rauheit Ra der zweiten Kontaktfläche in einem Bereich von 0,5 bis 10,0 µm ist, wobei die zweite Kontaktfläche die andere aus der Bolzenkontaktfläche (400) und der Gehäusekontaktfläche (500) ist; und
eine halbfeste oder flüssige Rostschutzbeschichtung (80) ist an der zweiten Kontaktfläche gebildet.

2. Metallrohr für Ölbohrungen (1) nach Anspruch 1, wobei:
eine chemische Behandlungsbeschichtung (90) ferner an der zweiten Kontaktfläche gebildet ist und
die Rostschutzbeschichtung (80) an der chemischen Behandlungsbeschichtung (90) gebildet ist.

3. Metallrohr für Ölbohrungen (1) nach Anspruch 1 oder Anspruch 2, wobei:
die zweite Kontaktfläche einer Strahlbehandlung ausgesetzt wird.

4. Metallrohr für Ölbohrungen (1) nach einem aus Anspruch 1 bis Anspruch 3, wobei:
die Plattierungsschicht (60) aus einer Zn-Ni-Legierung besteht.

## Revendications

1. Tuyau métallique pour puits de pétrole (1) comprenant :
un corps principal de tuyau (10) comportant une première partie d'extrémité (10A) et une deuxième partie d'extrémité (10B) ;
dans lequel :
le corps principal de tuyau (10) comporte :
une broche (40) formée au niveau de la première partie d'extrémité (10A), et
un manchon (50) formé au niveau d'une deuxième partie d'extrémité (10B) ;
la broche (40) comporte :
une surface de contact de broche (400) qui, au moins, a une partie filetée externe formée sur une surface périphérique extérieure de la première partie d'extrémité (10A) du corps principal de tuyau (10) ;
le manchon (50) comporte :
une surface de contact de manchon (500) qui, au moins, a une partie filetée interne formée sur une surface périphérique intérieure de la deuxième partie d'extrémité (10B) du corps principal de tuyau (10) ;
une couche de placage (60) est formée sur une première surface de contact, la première surface de contact étant une surface parmi la surface de contact de broche (400) et la surface de contact de manchon (500) ;
une couche de lubrifiant solide (70) est formée sur la couche de placage (60) ;
**caractérisé en ce que** :
la rugosité moyenne arithmétique Ra d'une deuxième surface de contact se situe dans une plage allant de 0,5 à 10,0 µm, la deuxième surface de contact étant l'autre surface parmi la surface de contact de broche (400) et la surface de contact de manchon (500), et
un revêtement antirouille (80) dans un état semi-solide ou un état liquide est formé sur la deuxième surface de contact.

2. Tuyau métallique pour puits de pétrole (1) selon la revendication 1, dans lequel :
un revêtement de traitement chimique (90) est formé en outre sur la deuxième surface de contact, et
le revêtement antirouille (80) est formé sur le revêtement de traitement chimique (90).

3. Tuyau métallique pour puits de pétrole (1) selon la revendication 1 ou 2, dans lequel :
la deuxième surface de contact est soumise à un traitement de sablage.

4. Tuyau métallique pour puits de pétrole (1) selon l'une quelconque des revendications 1 à 3, dans lequel :
la couche de placage (60) est composée d'un alliage de Zn-Ni.
